# EUROPEAN PATENT SPECIFICATION

(11) **EP 3 484 625 B1**
(45) Date of publication and mention of the grant of the patent: **04.08.2021**
(21) Application number: 17742527.9
(22) Date of filing: 14.07.2017
(51) Int. Cl.: B03B 9/06, B28C 5/42, B08B 17/02

(54) **WASHOUT APPARATUS**
AUSWASCHVORRICHTUNG
APPAREIL DE LAVAGE

(30) Priority: 15.07.2016 GB 201612362
(43) Date of publication of application: 22.05.2019
(73) Proprietor: Jonesco (Preston) Limited, Preston, Lancashire PR2 9ZD (GB); Hymix Limited, Telford, Shropshire, TF3 3AY (GB)
(72) Inventor: JONES, Andrew, Preston Lancashire PR2 9ZD (GB); BROMLEY, Gareth, Preston Lancashire PR2 9ZD (GB); HUMPISH, Nick, Telford TF7 5BN (GB); METZGER, Stephen, Telford Shropshire TF1 6AF (GB)
(74) Representative: HGF
(86) International application number: PCT/GB2017/052088
(87) International publication number: WO 2018/011602

(56) References cited:
- EP-A1- 0 733 410
- EP-A2- 1 402 954
- WO-A1-2009/092131
- TW-A- 201 436 843
- US-A- 774 201
- US-A1- 2010 051 062
- US-A1- 2012 024 328
- US-A1- 2012 111 364

## Description

The present invention relates to a washout apparatus and particularly, but not exclusively, to a washout apparatus for a mobile sedimentitious or cementitious (having the properties of cement) material container or mixer.

Concrete is a mixture of cement, water, aggregate material and, optionally, additives. When the cement is mixed with water, a chemical reaction occurs which causes the aggregate material (and additives) to bind together to form a viscous fluid concrete mixture. The concrete mixture can then be transferred into a concrete mixer truck for delivery to a construction site. In other arrangements, the concrete may not be mixed when loaded into the mixer. Instead, it can be loaded as separate materials which are subsequently mixed. There are also some facilities that will load a mixture of some of the concrete ingredients, with the balance of the mix being subsequently introduced as separate ingredients such that the concrete mixture can be prepared at a later time.

After the concrete mixture is poured at the construction site, the mouth of the mixing drum, the dispensing chutes and hoppers of the concrete mixer trucks must be washed out to remove the remaining concrete mixture before it hardens, so as to prevent the formation of a build-up of hardened residual concrete which adds to the tare weight of the truck, has a negative effect on the performance of the mixer, is unsightly and which is both difficult and time consuming to remove, risking damage to the dispensing apparatus of the truck.

The waste water ("washout water") from washing out the dispensing chutes and hoppers typically has a high pH value due to the composition of the concrete mixture. Therefore, best practice is to securely collect and retain the washout water and solids in leak proof containers, so as to prevent its discharge into the environment where it can increase the toxicity of other substances in surface waters and soils, inhibit plant growth and contaminate the groundwater. Furthermore, if discharged into the environment, the sediment in the washout water clouds the water in the environment, leading to problems including hindering aquatic plant growth due to lack of sunlight penetrating the clouded water, injury and/or death of aquatic life due to sediment clogging the gills of fish and/or reducing the depth of waterways by settlement of the sediment. It is also best practice to collect the hardened cementitious solids and aggregate to allow these materials to be recycled and reused to make fresh concrete or as a construction material. Typically, the solids and aggregate are collected by means of a filter or grid near the top of the washout container so that they can be placed in a separate container for reuse either at the construction site or back at the cement plant.

An arrangement as described above is proposed in EP 2 845 704 A1, which discloses an assembly adapted to wash a mobile sedimentitious or cementititous material container or mixer. The assembly is adapted to be mounted onto a vehicle or a trailer and comprises a moveable waste tank for collecting and retaining washout water. The waste tank can be moved between a waste emptying position which collects the washout water as the container is being washed out, and a storing position wherein the tank is securely stowed for transportation of the washout water to a suitable disposal location. The assembly further comprises a catchment tray having an aggregate sieve, for receiving the washout water and any debris. The catchment tray can be fluidly connected to the separate waste tank by means of a hose.

Although this arrangement provides a means of securely retaining the washout water, the moveable nature of the waste tank can give rise to problems with operation of the apparatus in the event that the mechanism controlling the movement fails. Furthermore, the separate waste tank and catchment tray arrangement increases the overall footprint of the apparatus and may make it unsuitable for some installations.

A similar arrangement is proposed in US 2014/0098625 A1, which discloses apparatus for a lorry-based concrete mixer, comprising a vessel for receiving and retaining debris and fluid exiting a discharge chute portion on the concrete mixer. The vessel is akin to the catchment tray of EP 2 845 704 A1 and, similarly to EP 2 845 704 A1, the apparatus comprises a separate waste water storage tank for securely retaining the washout water for transportation to the disposal location. The vessel optionally comprises a grille for retaining larger pieces of debris. Again, the separation of the vessel and water storage tank increases the overall footprint of the apparatus and may make it unsuitable for some installations.

Prior art document US 2012/024328 A1 discloses a wash-out container has a collection basin, a filter and a pump. Water used for washing tools is filtered and re-used so the wash-out container is stand-alone.

Prior art document US 2010/051062 A1 discloses a system for recovering concrete wash product includes a support frame mounted pivotally to a chassis of a transit concrete mixing vehicle, and a container mounted to the frame for arcuate movement with the frame, between a collecting position with the container disposed below a discharge chute of the vehicle, and a dispensing position with the container disposed adjacent an opening of a mixing drum of the vehicle. The container initially is placed in the collecting position to receive concrete wash product from the discharge chute by gravity as the chute is cleaned with water. After cleaning, the frame is pivoted to raise the container to the dispensing position, and a valve is opened to allow the concrete wash product to flow from the container into the mixing drum by gravity. In vehicles equipped with booster axle systems, the booster axle frame supports and positions the container, and also supports and positions the booster wheel/axle assembly.

Prior art document US 2012/111364 A1 discloses an apparatus for washing, storing and transporting concrete wastewater washed from concrete conveying chutes associated with a concrete mixing truck. The apparatus comprises a fluid container having a first opening and a pair of arms extending upwardly above the container. Each end of the arms distal from the container is adapted to mate with a first end of a first concrete chute member and to removably retain the first concrete chute member such that a second end of the first concrete chute member is higher than the first end and the first end is disposed above the first opening in the fluid container. The container is attachable to a concrete mixing truck such that a second concrete chute member attached to the concrete mixing truck can be positioned above the first concrete chute member while the first concrete chute member is mated with the arms.; A method of using the apparatus is also disclosed.

Prior art document EP 1 402 954 A1 discloses an apparatus and method for containing and filtering rinse water, sediment and aggregate resulting from washing the hopper and discharge chute components of a concrete truck at a construction site following use comprises a container removably mountable on the end of the discharge chute, the container having an open upper end, a screen removably positionable within the container and an outlet located in a lower portion of the container below the screen. The apparatus further includes a pump mountable on the truck, the pump having a suction hose extending between the container outlet and the pump, and a discharge hose extending from the pump to an open end discharging into the mixing drum. When the pump is operating, rinse water and relatively small particle size sediment flushed down the chute and into the container is automatically conveyed through the suction and discharge hoses into the mixing drum.

Prior art document WO 2009/092131 A1 discloses a slurry handling and disposal system for waste slurry and particulates; said system including a waste bin; said waste " bin provided with support structures for retaining a flexible removable filter element; said filter element supported above a floor of said waste bin; the particulate matter component of a volume of said waste slurry and particulates deposited in said filter element substantially retained in said filter element; the liquid component of said waste slurry and particulates collected in a base portion of said waste bin.

Prior art document EP 0 733 410 A1 discloses a drain flow control assembly for liquids draining from a sink or the like to a reservoir having a given liquid level. The flow control assembly includes a downtube with its inlet opening above the level of the liquid and its outlet below the liquid level. A divider plate surrounds the outlet opening and extends radially outwardly of the opening a distance equal to at least twice the diameter of the downtube opening. The assembly also includes a radially smaller, imperforate deflector plate positioned beneath and spaced closely apart from the divider plate so as to form a radially extending transfer space between the two plates. When the assembly is positioned in a liquid-containing reservoir with the downtube outlet below the upper surface of the liquid, liquid flows vertically through the downtube outlet opening and then horizontally through the radial transfer space. The flow through the transfer space serves to separate entrained particulate matter disposed in the liquid, and the divider plate serves to separate the reservoir into a lower, particulate matter settling region, and an upper region of quiescent, clarified liquid.

Prior art document US 774201 A relates to a catch basin for sink outlets and discloses the combination of a sink having a depressed pocket of inverted truncated form, with a supporting shoulder at the top, an outlet opening in the bottom and a waste pipe attached at the outlet opening and arranged to keep the pocket drained. A removable perforated strainer substantially conforms to the pocket, but is of reduced size, whereby clearance is afforded between the walls of the strainer and the walls of the pocket. A flange at the upper edge engages on the shoulder and supports the top of the strainer at or below the plane of the sink bottom and a strainer plate is supported in the bottom of the pocket directly over the outlet opening.

A further disadvantage with at least some of the aforementioned arrangements is that the size of the catchment tray relative to the washout water storage tank is small, meaning that there is an increased risk of overflow of the washout water from the catchment tray, in particular if the tray is significantly filled with waste solids or aggregate material from the chute/ hopper.

The present invention is designed with the foregoing in mind.

In accordance with a first aspect of the invention, a washout apparatus comprises a catchment tray and a reservoir, wherein at least a part of the catchment tray overlies at least a part of the reservoir and the catchment tray and reservoir are in fluid communication with each other, the catchment tray comprising an outlet leading to the reservoir and being shaped to guide fluid toward the outlet, the apparatus further comprising filter means located in the fluid outlet of the catchment tray, a drainage aperture between the catchment tray and the reservoir, wherein the filter is mounted in the drainage aperture and wherein the filter is removably mounted, and a drainage outlet in the reservoir.

Such an arrangement, in at least one embodiment of the invention, reduces the overall footprint of the washout apparatus by at least partially superimposing the catchment tray over the reservoir.

The catchment tray and reservoir are preferably in fluid communication with each other via the filter. This enables waste washout water and fine to pass through the filter and into the reservoir, whilst coarse aggregate is retained by the filter.

The washout apparatus is preferably adapted to receive and retain liquid and solid debris such as washout water and aggregate in the catchment tray and/ or filter and/or in the reservoir.

The washout apparatus comprises a drainage aperture between the catchment tray and the reservoir. The filter is mounted in the drainage aperture and is removably mounted. This configuration enables the filter to be removed for the purposes of emptying any coarse aggregate retained in the filter.

The catchment tray preferably comprises an elongate portion for increasing the surface area and thus capacity of the tray. A collecting portion may also be positioned at one end of the elongate portion.

The elongate portion may be displaceable with respect to the collecting portion.

For example, the elongate portion may be hingedly attached to the collecting portion. The elongate portion may be pivotable between a first, extended position and a second, folded position.

Preferably, the catchment tray comprises a base wall and an enclosing wall, extending upwardly from the base wall to define a receiving volume.

The drainage aperture and removable filter may be positioned in the base wall of the catchment tray.

The base wall of the catchment tray may be inclined to direct fluid towards the drainage aperture and filter.

For example, the base wall of the catchment tray may be inclined or converge downwardly from the periphery towards the centre of the catchment tray. The drainage aperture may be positioned towards the centre of the catchment tray. This base wall configuration promotes flow of waste washout water and debris within the catchment tray towards the filter.

However, the drainage aperture may be located at any position within the catchment tray. The drainage aperture and removably mounted filter are preferably positioned directly above the reservoir to encourage drainage of washout water and fine debris through the filter and directly into the reservoir below.

The height of the enclosing wall may not be constant around its periphery and may, for example, vary along one or more sides of the catchment tray to increase the depth of the tray along its length and/ or width. For example, the height of the enclosing wall portion of the collecting portion may be greater than the height of the enclosing wall of the elongate portion. This configuration increases the capacity of the catchment tray and provides a receiving volume which is complementary to the wheel well or mudguard of a vehicle.

Preferably, the height of the enclosing wall of the elongate portion gradually increases from a front end towards a rear end thereby defining a substantially wedge-shaped profile. This configuration enables the narrower, lower height elongate portion to be positioned in the limited space between the right hand rear wheel well or mudguard and the discharge chute(s) of the concrete mixer truck or similar, with the depth of the enclosing wall increasing behind the wheel well or mudguard where space is less limited.

The underside of the elongate portion may be arcuate. Such a configuration therefore conforms to the shape of the wheel well or mudguard and enables the washout apparatus to be positioned over these structures to lie directly underneath the discharge chutes of the truck.

The enclosing wall may comprise a substantially rectangular shaped recess or may comprise a "dog leg" shape in a configuration wherein the wider collecting portion is positioned at a rear end of the elongate portion.

The filter may comprise a base wall and an enclosing wall extending upwardly from the periphery of the base wall to define a bucket-like receiving volume for liquid and solid matter.

The enclosing wall of the filter preferably comprises one or more apertures for selectively retaining solid matter. The apertures may be of any configuration, for example, but not limited to elongate, round, oval or rectangular. In some embodiments, the filter may comprise a grille or mesh or other similar means of selectively retaining particles based on their size.

The receiving volume enables collection and retention of coarse aggregate whilst allowing water and fine aggregate to pass through the apertures in the filter and into the reservoir. The coarse aggregate can remain in the filter during transportation to avoid the requirement to empty its contents on site where there may not be appropriate disposal or recycling facilities.

The filter may comprise a cover means which is preferably integrally formed with the enclosing wall of the filter and may be arranged such that it extends perpendicularly over and around the upper rim or periphery of the enclosing wall to overlie a portion of the base wall. The cover means may be a lid or similar.

In one embodiment, the filter may comprise a cover means securable to the enclosing wall to overlie a portion of the base wall. The cover means may be a lid or similar and is preferably secured to the remainder of the filter by connection means such as fasteners or interlocking components.

The cover means of any embodiment preferably comprises an aperture for receipt of liquid and solid matter and preferably slopes downwardly from the periphery of the cover means towards the periphery of the aperture. The downwardly sloping cover directs the flow of waste washout water and aggregate towards the aperture and also assists in containing the coarse aggregate in the receiving volume of the filter during transportation by partially overlying the periphery of the receiving volume.

The partial overlap of the cover means over the periphery of the receiving volume provides a means of lifting the filter as the underside of the overlapping portion can be grasped. One or more recesses may be provided on the underside of at least a part of the cover means, preferably on the overlying or overhanging portion or lobes of the cover means. The recesses provide hand holds or grip points with which a user can lift the filter. The recesses may comprise a substantially semi-circular shape and may further comprise a shoulder portion between the recess and the underside of the cover means.

One or more recesses may be provided on the underside of the bucket-like receiving volume. For example, the underside of the receiving volume may comprise an annular recess extending around or adjacent the periphery of the underside. The underside may comprise a substantially centrally located recess, which may be circular.

The peripheral edge of the cover means preferably extends substantially perpendicularly outwards with respect to the enclosing wall of the filter to define a lip. The underside of the lip is preferably planar and may be arranged to abut an upper surface of the drainage aperture, said upper surface of which may be in the form of an annular flange extending around the periphery of the aperture to provide a mounting means onto which the lip of the cover means can be placed to mount the filter within the drainage aperture.

The peripheral edge of the aperture and/or cover means may comprise one or more lobes. For example, the cover means, for example the peripheral edge or lip of the cover means, may comprise four lobes, which may consist of two larger lobes and two smaller lobes or any combination thereof.

The two larger lobes may be disposed substantially opposite one another and the two smaller lobes are disposed substantially opposite one another. The underside of the lobes may partially overly the periphery of the receiving volume and may be grasped so as to enable the filter to be lifted out of the catchment tray area for emptying. The underside of each lobe may comprise one or more recesses for ease of grasping.

The two larger lobes may, in use, be disposed so that they are positioned forward and rearward with respect to the front and rear portions of the catchment tray, with the smaller lobes being positioned inwards and outwards, respectively, with respect to the sides of the catchment tray. This arrangement reduces the risk of liquid and/ or debris spillage from the receiving volume during transportation, since the larger forwardly and rearwardly positioned lobes more securely retain the contents of the filter bucket (receiving volume) during sideways motion and braking of the vehicle, as they overlap the periphery of the receiving volume to a greater extent than the two smaller lobes. The underside of one or more of the lobes is preferably planar and may be configured to abut an upper surface of one or more corresponding recesses in the drainage aperture, for example, one or more corresponding recesses in the peripheral flange of the drainage aperture, to enable the filter to be securely mounted within the drainage aperture. The peripheral flange of the drainage aperture may comprise, for example, four recesses, each recess positioned and sized to accommodate the four lobes of the cover means.

The filter is preferably positioned above the reservoir to allow water to flow directly from the filter into the reservoir below.

Preferably, the catchment tray completely superimposes or overlies the reservoir in plan view. This minimises the overall footprint of the washout apparatus, making it suitable for application on a range of vehicles and mobile apparatus.

In a preferred embodiment, the catchment tray and reservoir are formed as a single unit, i.e. the catchment tray is integrally formed or integrally moulded with the reservoir. For example, the catchment tray and reservoir are moulded as a single unit such that the catchment tray lies inside the boundary of the reservoir in a double-wall arrangement, with the inner wall defined by the catchment tray and the outer wall defined by the reservoir.

The reservoir preferably comprises a base wall and an enclosing wall extending upwardly from the periphery of the base wall to define a receiving volume.

The base wall of the reservoir comprises two downwardly sloping planar portions. One of the planar portions may be approximately one quarter the width of the other planar portion. The provision of the downwardly sloping planar portions increases the capacity of the reservoir, without increasing the footprint of the washout apparatus and also assists in directing the flow of waste washout water and fine debris out of the reservoir during drainage.

The enclosing wall of the reservoir may comprise a recessed portion.

The recessed portion may define the lower half of a rear portion of the enclosing wall.

The drainage outlet in the reservoir preferably comprises a hose outlet, which is preferably positioned in the lower half of the enclosing wall, most preferably on the recessed portion of the enclosing wall of the reservoir. This ensures that the recessed portion accommodates the hose without increasing the overall footprint of the washout apparatus and also encourages drainage of the reservoir contents by ensuring that the drainage outlet, i.e. hose outlet, is positioned at a lowermost point of the reservoir.

The washout apparatus preferably further comprises a hose retaining means for retaining one end of the hose. The hose retaining means may depend from a portion of the catchment tray.

The washout apparatus may further comprise a hose coupling member for coupling a hose to the hose retaining means. Preferably, the hose retaining means is positioned above the level of the hose outlet. This means that the end of the hose connected to the retaining means is positioned higher than the level of the water in the reservoir which prevents water overflowing from the hose during transportation, without the requirement for a valve. It will be appreciated that by eliminating the requirement for a valve, the apparatus is simplified which can reduce manufacturing costs. Furthermore, by removing the valve, this eliminates the problem of accumulation of sedimentitious/ cementious debris accumulating around the valve and jamming it, as can occur with other washout apparatus comprising a valve.

When decoupled, the open end of the hose can be lowered to below the level of the hose outlet and water level in the reservoir to allow drainage from the reservoir. The washout apparatus preferably further comprises a hose for facilitating emptying of the reservoir.

A hose retaining means may be positioned at another location on the vehicle, i.e. not necessarily located on the washout apparatus itself. This arrangement does not necessarily preclude the provision of a hose retaining means on the washout apparatus itself, which may be useful in the event that hoses of different lengths are employed on a vehicle and washout apparatus combination.

For example, the vehicle may comprise a hose retaining means capable of retaining the hose of the washout apparatus. Such an arrangement may be useful and/or necessary in situations which require a longer length of hose that would be unsuitable for coupling directly to the washout apparatus, or in situations where a greater ground clearance is required or where access to the hose retaining means on the washout apparatus is inconvenient or difficult to access.

The washout apparatus may, in use, be adapted to be removably mounted onto a lorry-based concrete mixer or other vehicle or portable equipment of which at least a part requires washing out after use. The washout apparatus is preferably adapted to be mounted below one or more discharge chutes on the concrete mixer or other vehicle.

The washout apparatus may comprise a mounting means such as a mounting frame for such purposes. The mounting frame may comprise an enclosing frame positionable around the reservoir and/or around a part of the catchment tray and/or reservoir. For example, the frame may be positioned around the enclosing wall of the reservoir. The mounting frame preferably comprises metal.

The washout apparatus may further comprise one or more mounting apertures or recesses adapted to engage with complementarily shaped lugs on the vehicle or mobile apparatus. For example, the washout apparatus may comprise one or more square or round apertures or recesses on the underside of the catchment tray which engage with corresponding lugs projecting upwards from a part of the vehicle such as the wheel well or mudguards. The apertures or recesses may be of any other shape or configuration which is adapted to engage with a corresponding fastener or securing means on the vehicle or other mobile apparatus. The apertures or recesses may be positioned on the underside of the catchment tray, preferably in the elongate portion of the tray.

An embodiment of washout apparatus for mounting to the right hand rear wheel well or mudguard of a vehicle preferably comprises an elongate portion and a square, or rectangular, or rounded base or collecting portion thus having the general shape of a reversed L in plan view. This configuration enables the elongate portion of the reversed L-shape to be mounted over the wheel well or mudguard to cause the wider base portion of the reversed L shape to sit behind the wheel well or mudguard. It will be appreciated that an embodiment of washout apparatus for mounting to the left hand side rear wheel well or mudguard will have the opposite configuration, i.e. will preferably be substantially L-shaped. The corners of the collecting portion and the boundary between the base wall and enclosing wall are preferably rounded, to prevent the accumulation of fine debris in these regions during the washout procedure. Similarly, the boundary between the base wall and the enclosing wall of the filter is preferably rounded, again, to prevent the accumulation of debris.

The washout apparatus preferably comprises plastic, for example, polyethylene. The washout apparatus may be formed by moulding and may comprise a double wall structure in at least a part of the apparatus. The double wall structure may be capable of receiving and retaining waste washout water, thus increasing the capacity of the reservoir. By using plastic, including, but not limited to polyethylene, the surfaces of the washout apparatus have a greater resistance to cemetitious/ sedimentitious particle adhesion as compared to, for example, metal surfaces, which eliminates or at least minimises cementitious/ sedimentitious waste build up on the washout apparatus.

The wall may be of any suitable thickness, for example, but not limited to 3mm to 10mm, for example, 5mm to 8mm, for example, 6mm thick.

The washout apparatus may be of any shape, configuration or dimension as required and/or as suitable for the vehicle/ portable apparatus/ environment it is to be employed in. For example, the washout apparatus may have a height of between approximately 500mm to 600mm, for example, 525mm; a width of between approximately 500mm to 1000mm, for example 750mm; and/or a depth of between approximately 1500mm to 2000mm, for example 1850mm. The capacity of the catchment tray and/or reservoir, respectively, may be between approximately 40 litres and 100 litres, for example, 60 litres. The filter may have a capacity of between approximately 5 litres and 15 litres, for example 8 litres. The wall of the filter may be between approximately 3mm to 10mm, for example, 5mm to 8mm, for example, 6mm.

The washout apparatus components may be formed by plastic moulding, e.g. a rotational moulding process.

The washout apparatus may further comprise a second reservoir. The second reservoir may be in fluid communication with the catchment tray and/or (first) reservoir. The second reservoir may be useful in the event that a greater capacity for storing washout water is required.

In accordance with a second aspect of the invention, a vehicle comprises a washout apparatus according to the first aspect of the invention.

The vehicle may comprise more than one washout apparatus in accordance with the first aspect of the invention. For example, two washout apparatus may be provided on a vehicle, which may be provided one on either side of the vehicle, or provided at alternative locations around the vehicle to best suit the vehicle configuration.

By way of example only, specific embodiments of the concrete mixer washout apparatus will now be described, with reference to the accompanying drawings, in which:
Figure 1 is a perspective view from above of the rear and outer side of a first embodiment of washout apparatus in accordance with the present invention;
Figure 2 is a perspective view from above of the front and inner side of the washout apparatus of Figure 1;
Figure 3 is a perspective view from underneath of the rear and inner side of the washout apparatus of Figure 1;
Figure 4 is a plan view of the washout apparatus of Figure 1;

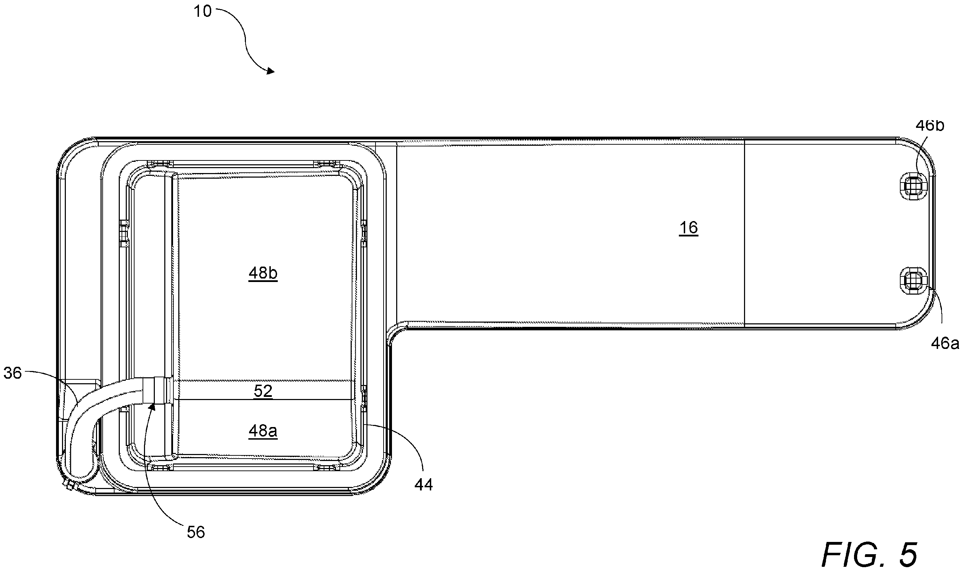

Figure 5 is a view from underneath the washout apparatus of Figure 1;
Figure 6 is a view of the outer side of the washout apparatus of Figure 1;
Figure 7 is an exploded view of the inner side and top of the washout apparatus of Figure 1;
Figure 8 is a view from above and the side of the filter of the washout apparatus of Figure 1;
Figure 9 is a view from underneath of the filter shown in Figure 8;
Figure 10 is a perspective view of the embodiment of Figures 1-8 fitted to the rear of a concrete mixer truck;
Figure 11 is a side view of the concrete mixer truck and washout apparatus shown in Figure 8;
Figure 12 is a perspective view from above of the rear and outer side of a second embodiment of washout apparatus in accordance with the present invention;
Figure 13 is a perspective view from above of the front and inner side of the washout apparatus of Figure 12;
Figure 14 is a perspective view from underneath of the rear and inner side of the washout apparatus of Figure 12;
Figure 15 is a view of the outer side of the washout apparatus of Figure 12 in a folded configuration;
Figure 16 is a perspective view from above of the front and inner side of the washout apparatus of Figure 12 in a folded configuration; and
Figure 17 is a view of the outer side of the washout apparatus of Figure 12 in an extended configuration.

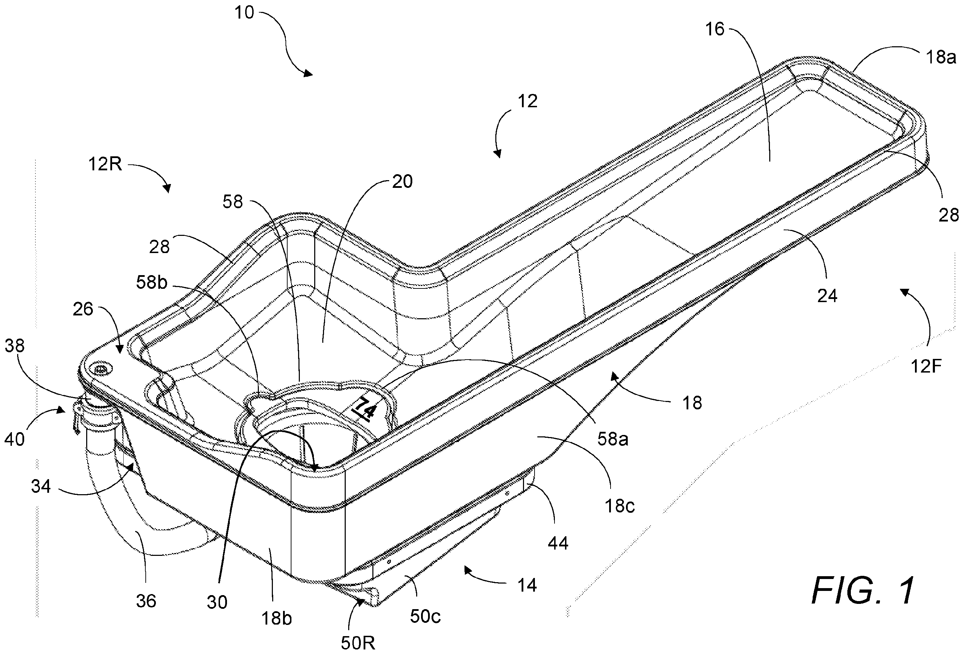

Figure 1 illustrates a first embodiment of washout apparatus which is attachable to the rear of a concrete mixer truck.

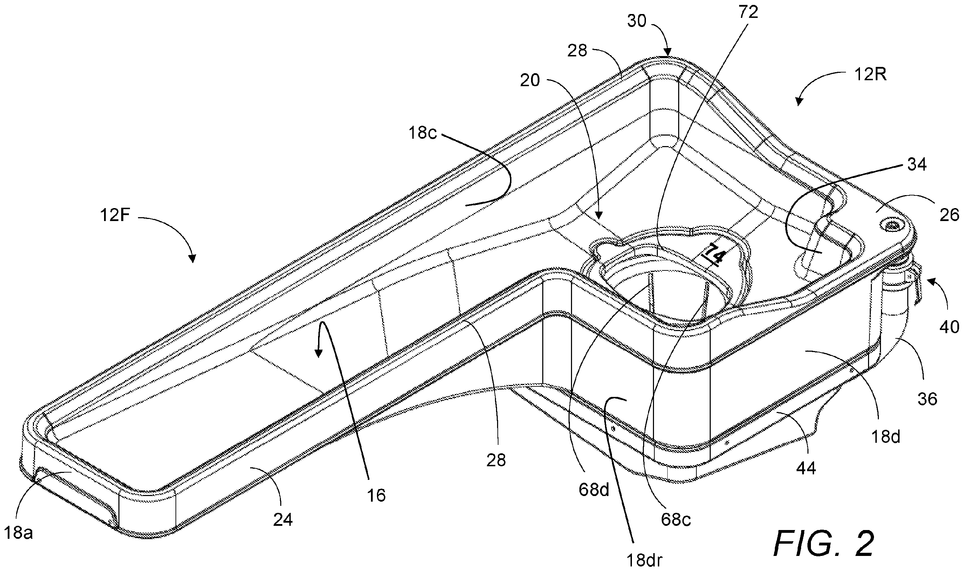

As best shown in Figures 1 and 2, the washout apparatus 10 comprises a catchment tray 12 for receiving washout water and any associated debris, and a reservoir 14 for retaining the washout water, as will be explained.

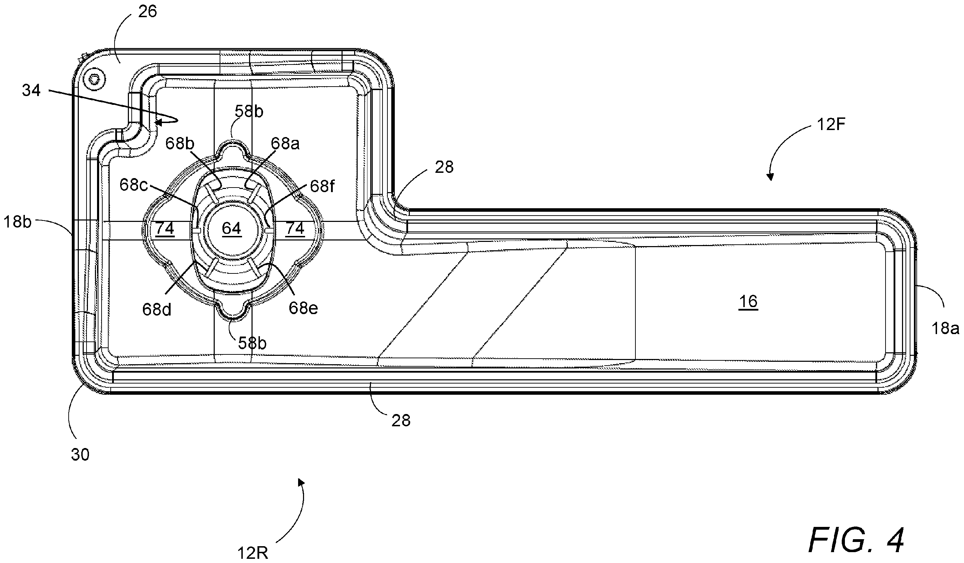

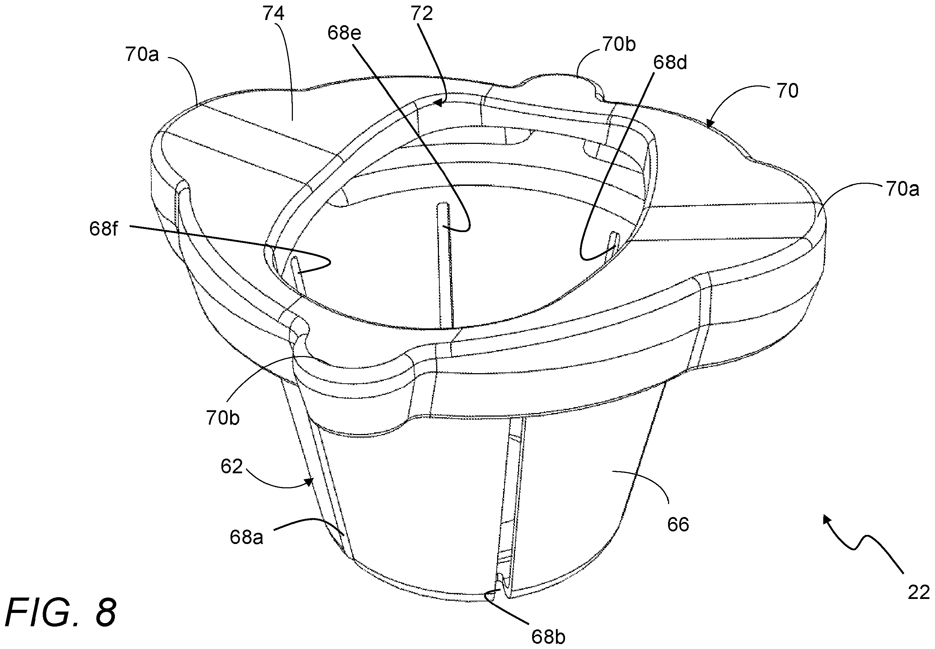

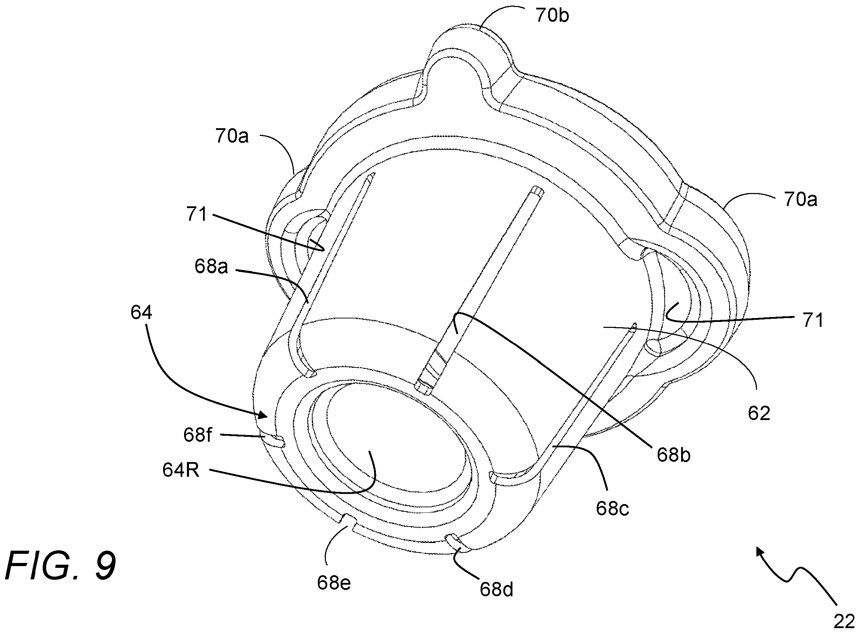

The catchment tray 12 and reservoir 14 are each formed from 6mm thick injection moulded polyethylene. The tray comprises an elongate portion 12a, for positioning above the mudguard 482 of the rearmost, right hand side wheel of a concrete mixer truck 400 (see Figures 8 and 9), and a square, collecting portion 12b located at the rear end of the elongate portion 12, for positioning behind the mudguard 482. The tray 12 therefore has the general shape of a reversed L in plan view (see Figure 4).

The catchment tray 12 comprises a reversed, substantially L-shaped base wall 16 having an enclosing wall 18 extending upwardly from the periphery of the base wall 16 which, together with the base wall 16, define a receiving volume 20 for receipt of washout water and associated debris. The portion of the base wall 16 of the elongate portion 12a of the catchment tray 12 slopes downwardly from its front end to its rear end and the portion of the base wall 16 of the square, collecting portion 12b of the catchment tray 12 slopes downwardly from its periphery towards a drainage aperture 58 located at the centre of the collecting portion 12b. The catchment tray 12 further comprises a removable filter 22 for separating the debris from the washout water, located in the aperture 58 positioned at the centre of the square, collecting portion 12b of the tray.

The enclosing wall 18 comprises a narrow, straight front wall portion 18a and a wider straight rear wall portion 18b, which is substantially parallel to the front wall portion 18a, and two side wall portions 18c, 18d, interconnecting the front and rear wall portions 18a, 18b. The outer side wall portion 18c runs in a straight and substantially perpendicular line between the front and rear wall portions 18a, 18b and the inner side wall portion 18d is dog-legged, comprising a rear inner side wall portion 18d extending perpendicularly from the inner end of the rear wall portion 18b, a transversely extending intermediate portion 18dr extending perpendicularly inwardly from the front end of the rear inner side wall portion 18d, and a front inner side wall portion 18e extending perpendicularly from the inner end of the intermediate wall portion 18dr to the inner end of the front wall portion 18a, thereby defining the reversed L-shaped receiving volume 20.

This particular shape enables the washout apparatus 10 to be unobtrusively mounted over the mudguard of the right hand side rear wheel 480 of a concrete mixer truck 400, as best shown in Figures 8 and 9, such that the elongate portion 12a of the catchment tray 12 sits over and immediately behind the mudguard 482 of the truck 400, whilst the collecting portion 12b of the catchment tray 12, when mounted, lies to the rear of the mudguard 482 and immediately below a discharge chute 484 of the truck 400, as will be explained.

The height of the rear wall portion 18b, rearmost third of the side walls 18c, 18d and the inwardly directed (forward facing) side wall portion of the recess 18dr, is the substantially the same and is greater than the height of the front wall portion 18a. Consequently, the height of the side wall portions 18c, 18d diminishes gradually from the rearmost third of the side wall portion 18c, 18d, to the front wall portion 18a, thereby assuming a generally wedge-shaped profile.

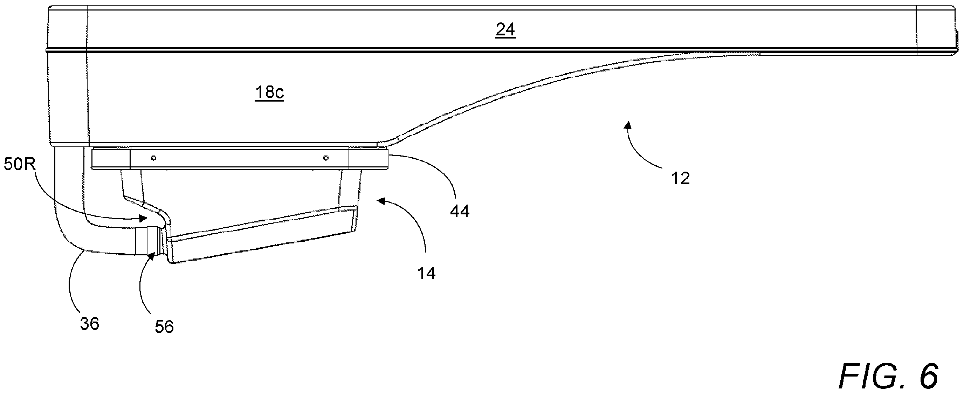

As best seen in Figure 6, the undersurface of the elongate portion 12a of the catchment tray 12 is arcuate, to complement the shape of the mudguard 482 over which it is fitted.

The upper edge of the enclosing wall 18 of the catchment tray 12 is defined by an integrally formed peripheral overturned lip 24, which extends downwardly and substantially parallel to the outer face of the enclosing wall 18 by approximately one third the depth of the rear wall portion 18b, around the entire catchment tray 12, with the exception of the inner rear corner 26 where the overturned lip 24 extends substantially perpendicularly from the enclosing wall 18 so as to lie substantially parallel to the base wall 16 of the catchment tray 12 to form a planar section 26 for mounting a hose coupling, as will be explained.

The boundary between the upper edge of the enclosing wall 18 and the peripheral overturned lip 24 and planar section 26 is defined by a peripheral rounded shoulder portion 28.

The height of the enclosing wall 18 in the region of the planar inner rear corner section 26 is slightly less than the height of the enclosing wall 18 around the remainder of the substantially square shaped collecting portion 12b of the catchment tray 12.

Consequently, the height of the rear wall portion 18b and inner side wall portion 18d of the square shaped collecting portion 12b increases gradually from the planar inner rear corner section 26 to the outer rear corner 30 of the rear wall 18b and the frontmost inner corner 32 of the substantially square shaped collecting portion 12b, thereby assuming a generally wedge-shaped profile when viewed from the side (see Figure 6).

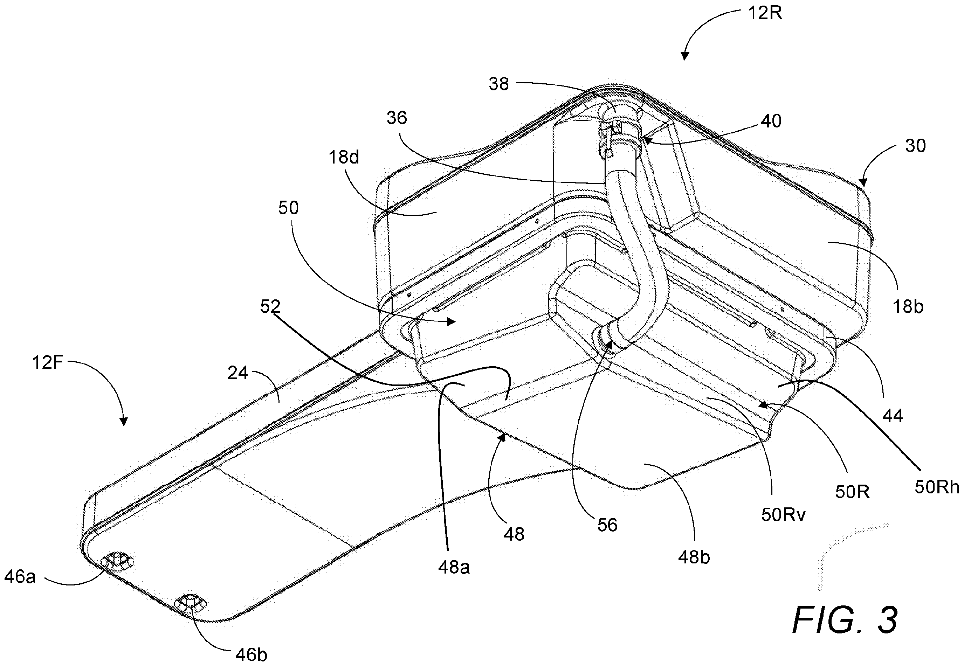

As best shown in Figure 3, the planar corner section 26 overlies a recess 34 in the rear wall portion 18b for releasable engagement with a hose 36, as will be explained. A cylindrical projection 38 extends downwardly from the undersurface of the corner section 26 to a length of approximately half the length of the rear wall portion 18b from the underside of the planar corner section 26 for releasable connection with one end of the hose 36 by means of a coupling 40.

The recess 34 in the rear wall portion 18b merges into the rear most portion of the inner side wall 18d of the square shaped portion 12b such that the length of the inner side wall 18d of the square portion 12b is slightly shorter than the length of the opposing (outer) side wall portion 18c.

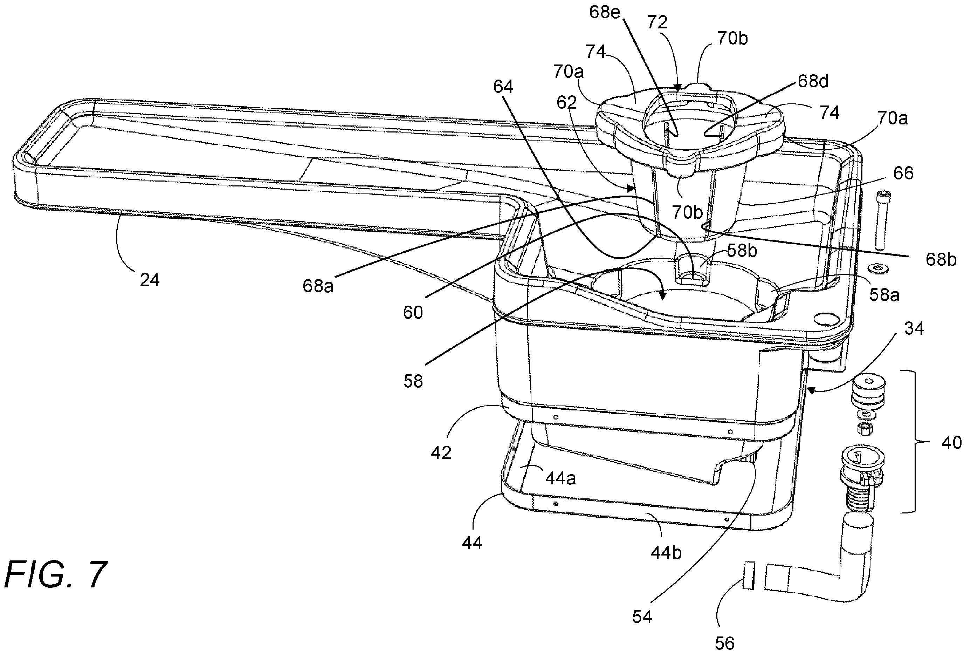

As best shown in Figure 7, the base of the outer face of the enclosing wall 18 of the square portion 12b has a recessed periphery 42 for accommodating a supporting member in the form of an annular metal mounting frame 44, which extends around the periphery of the base of the square portion 12b to facilitate secure mounting of the apparatus 10 to a vehicle 400, as will be explained. The profile of the metal mounting frame comprises a flange 44a from which an enclosing wall 44b extends perpendicularly upwardly which together define a seat in which the recessed periphery 42 of the square portion 12b sits, so as to support the apparatus 10 when mounted.

The elongate section 12a of the washout apparatus is mounted onto the truck 400, as will be explained, by means of two spaced apart substantially square recesses 46a, 46b in the undersurface of the elongate section 12a, located at the front inner and outer corners, respectively, as best seen in Figure 3.

The reservoir 14 is integrally formed as one unit with the catchment tray below the undersurface of the catchment tray. The reservoir 14 comprises a base wall 48 and an enclosing wall 50, which together define a reservoir receiving volume (not visible) for receipt and storage of waste washout water and fine aggregate capable of passing through the filter means, as will be explained.

The base wall 48 comprises a first, innermost planar portion 48a which extends across approximately one quarter of the width of the base wall 48, and a second, outermost planar portion 48b which extends across the remaining three quarters of the base wall 48. The two planar portions 48a, 48b slope downwardly towards each other from the side portions of the enclosing wall 50 such that they meet at a planar, elongate, longitudinally extending join 52 located substantially one quarter of the way across the width of the base wall 48, as best seen in Figure 3.

The reservoir enclosing wall 50 comprises a straight, inwardly stepped rear wall portion 50R, a straight front wall portion 50a which is substantially parallel to the rear wall portion 50R and two side wall portions 50c, 50d interconnecting the front and rear wall portions. The corners between the front, rear and side wall portions 50a, 50R, 50c, 50d are rounded. The enclosing wall 50 of the reservoir 14 lies inwardly of the enclosing wall 18 of the square shaped collecting portion 12b of the catchment tray 12.

The inwardly stepped rear wall portion 50R comprises an aperture which extends outwardly to a length approximately equal to the length of the horizontal face 50Rh of the stepped rear wall portion 50R, to define a tubular hose fitting 54 on the vertical face 50Rv of the stepped portion 50R, level with the intersection 52 in the base wall 48. The tubular hose fitting 54 receives the lower end of the hose 36 whose upper end is releasably connected to the projection 38 extending from the underside of the planar corner section 26. The lower end of the hose 36 is secured to the projection 54 by means of a coupling such as a hose clip 56, to enable drainage of the reservoir contents, when the upper end of the hose 36 is decoupled.

When the upper end of the hose 36 is attached to the projection 38 via coupling 40, it lies above the water level in the reservoir 14, thus preventing water from leaking out of the reservoir 14 via the hose 36, without the need to employ a valve or similar arrangement. This not only simplifies construction of the washout apparatus and reduces the cost of production, but also avoids problems associated with such a valve jamming with fine aggregate debris during the emptying process. The upper end of the hose 36 can be decoupled from the projection 38 to enable drainage of the reservoir 14 when required, as will be explained.

The base wall 16 of the catchment tray 12 slopes downwardly from the outer edges towards the centre point of the square section 12a of the tray 12 wherein a substantially circular drainage aperture 58 is located, so as to direct the flow of washout water towards the aperture 58. As best shown in Figure 7, the aperture 58 opens and extends downwardly the depth of the base wall material and into the reservoir 14 below the square, collecting portion 12b enabling waste washout water to pass from the catchment tray 12 into the reservoir 14 for secure storage.

The periphery of the aperture 58 further comprises a first pair of opposed semi-circular recesses 58a positioned at the front and rear sides of the aperture 58, respectively and extending approximately three quarters of the depth of the base wall material so as to form a flange portion 60 in the lowermost quarter portion of each recess 58a.

A second pair of opposed semi-circular recesses 58b is positioned either side of the aperture 58, substantially half way between the first pair of semi-circular recesses 58a so that the aperture 58 has four discreet lobes 58a, 58a, 58b, 58b. Each of the second pair of recesses 58b is approximately half the length of each of the first pair of recesses 58a and, like the first pair of recesses 58a, extend approximately three quarters the depth of the base wall material so as to form a flange portion 60 in the lowermost quarter portion of the recess 58b.

The aperture 58 is sized to receive the complementarily shaped filter 22. The filter 22 comprises injection moulded 6mm thick polyethylene. The filter 22 comprises a circular base wall 64 and an enclosing wall 66, extending upwardly and outwardly from the periphery of the base wall 64 to define a substantially cylindrically shaped receiving volume in the form of a bucket 62, as best seen in Figures 7, 8 and 9.

The base wall 64 comprises a circular recess 64R positioned inwardly of the periphery of the base wall 64 and centrally with respect to the enclosing wall 66. The circular recess 64R provides a grip means on the underside of the bucket 62 for use during emptying.

The enclosing wall 66 comprises six equally spaced apart vertically orientated elongate apertures 68a, 68b, 68c, 68d, 68e, 68f, extending radially outward and upwardly from the periphery of the base wall 64 to just below the upper peripheral rim of the enclosing wall 66, as best shown in Figures 8 and 9. The elongate apertures 68a, 68b, 68c, 68d, 68e, 68f allow waste wash water and fine debris to pass through, whilst preventing the passage of coarser pieces of aggregate or debris. The larger debris is retained in the bucket 62 so that it can be emptied as necessary to allow recycling of the aggregate or debris therein.

As best seen in Figures 7 to 9, the peripheral rim of the bucket 62 is covered by a lid 70 having a first pair of outwardly extending semi-circular projections 70a, shaped and sized so as to abut the first pair of semi-circular recesses 58a in the aperture 58 of the base wall 16, and a second pair of outwardly extending semi-circular projections 70b shaped and sized to abut the second pair of semi-circular recesses 58b in the aperture 58 of the base wall 16. As shown in Figures 7 and 8, the lid 70 comprises a substantially rectangular aperture 72 positioned such that the shorter edges of the aperture 72 are immediately adjacent the second pair of outwardly extending projections 70b and the longer edges of the aperture 72 are substantially parallel to the rear wall portion 18b of the washout apparatus. The lid 70 is integrally formed with the peripheral rim of the enclosing wall of the bucket 62, i.e. the lid 70 and the bucket 62 are formed as a single unit. The corners of the aperture 72 are rounded and the side walls are slightly rounded outwardly.

The longer edges of the aperture 72 overlie opposing peripheral sides of the enclosing wall 66 of the filter bucket 62 to create two opposing planar overhanging portions 74, the undersides of which can be grasped so as to lift up and remove the filter 22 from the washout apparatus 10 for emptying.

As best seen in Figure 9, the underside of each overhanging portion 74 comprises a substantially semi-circular shaped recess 71 to facilitate grasping of the overhanging portions 74. Each semi-circular recess 71 is orientated such that the substantially planar base portion of the recess 71 lies adjacent the enclosing wall 66 of the bucket 62 and the rounded top portion of the recess 71 lies outermost so as to conform with the periphery of the corresponding lobe 70a.

The overhanging portions 74 of the lid 70 are substantially planar but slope downwardly from their respective periphery towards the aperture 70, to encourage the flow of water and debris down into the filter bucket 62. The lid 70 is positioned such that it lies just below the lowest level of the base wall 16 of the catchment tray 12, to promote flow of waste water and debris downwardly through the aperture 72 in the lid 70.

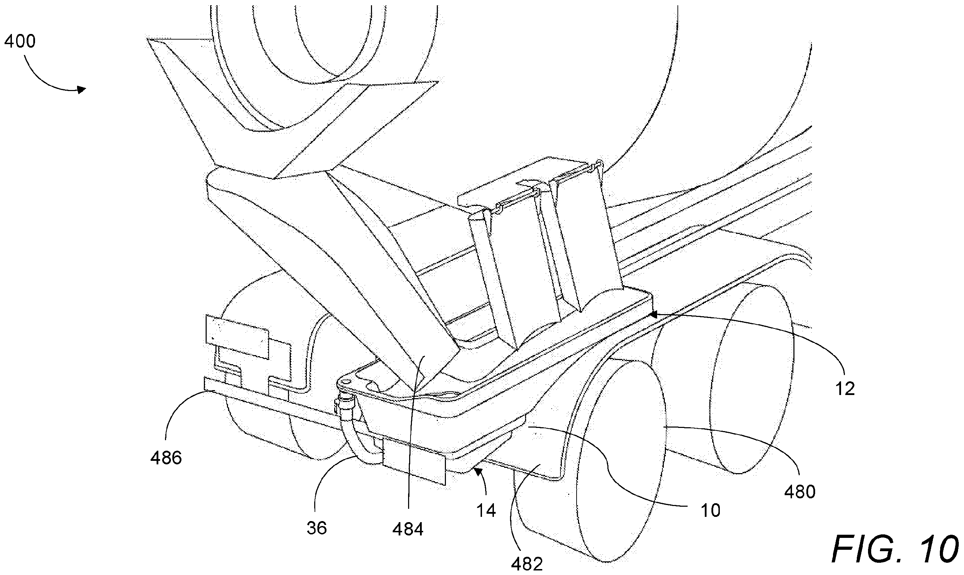

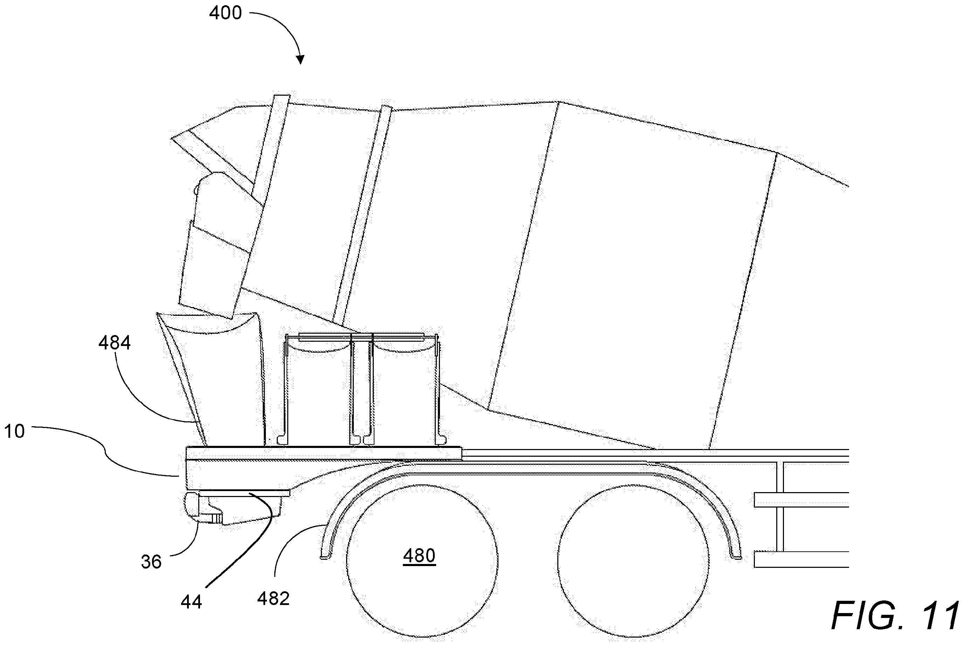

In use, the washout apparatus 10 is mounted onto the rear right hand side of a concrete mixer truck 400 so that the front elongate portion 12a of the apparatus 10 overlies the rear right mudguard 482 and the rear, substantially square shaped collecting portion 12b of the apparatus 10 is positioned rearward of the rear right mudguard 482 and directly underneath the primary discharge chute 484, as shown in Figures 10 and 11.

The square apertures 46a, 46b on the underside of the base wall 16 of the front of the apparatus 10 are aligned with corresponding lugs (not visible) projecting upwardly from the right hand rear mudguard 482 of the concrete mixer truck 400 so as to anchor the front of the apparatus 10 and prevent movement during the washout procedure.

The mounting frame 44 surrounding the base of the square, collecting portion 12b of the catchment tray 12 is secured to the rearmost rail 486 of the truck chassis using a plurality of spaced apart bolts (not visible) so as to secure the rear of the washout apparatus 10 and prevent its movement during washout.

After the pour of concrete is completed, the driver removes any of the extension chutes (not shown) and positions them above the catchment tray 12 and positions the main chute 486 such that its mouth, i.e. the end closest to the catchment tray 12, lies above the collecting portion 12b of the catchment tray 12. The driver then washes down the hopper first and then the main chute 484, using clean water carried on-board the vehicle 400 for washout purposes.

During this process, all washout water and aggregate travel down the main chute 486 and into the square, collecting portion 12b of the catchment tray 12 positioned under the chute 486, where the sloping base wall 16 of the catchment tray 12 and sloping planar overhangs 74 of the filter 22 direct the flow of water and aggregate towards and through the aperture 72 in the lid 70 of the filter 22.

The driver also washes the extension chutes (not shown). The washout water from the extension chutes (not shown) flows into the catchment tray 12 and collecting portion 12b, in a similar manner to that explained above.

The aggregate in the washout water accumulates in the filter 22 and receiving volume 20 of the catchment tray 12. Waste washout water and fine aggregate particles pass through the elongate apertures 68a, 68b, 68c, 68d, 68e, 68f of the bucket 62 of the filter 22 and into the reservoir 14 below where they are securely retained. Coarse aggregate particles which are unable to pass through the elongate apertures 68a, 68b, 68c, 68d, 68e, 68f collect in the bucket 62 of the filter 22.

The filter 22 is removed by the driver grasping the underside of the planar overhangs 74 either side of the aperture 72 in the lid 70 and lifting the filter 22 upwards and away from the reservoir 14 and tray 12. The filter 22 is then upturned over a bin either at the construction site, or back at the cement plant, to release the coarse aggregate from the bucket portion 62 of the filter 22 and into the bin for recycling. If suitable recycling facilities are not available on site, the driver can simply leave the filter bucket 62 in position without emptying it first and safely transport the waste aggregate back to the cement plant without risk of it falling out of the filter bucket during transportation.

In contrast with prior art arrangements which retain the aggregate on a planar grid towards the top of a vehicle washout assembly, the filter bucket 62 and overhang portions 74 prevent the aggregate from bouncing out of the washout apparatus during transportation. In particular, by orientating the larger lobes 70a forward and rearward with respect to the catchment tray 12 in use on the vehicle 400, the contents of the bucket 62 are more securely retained during sideways motion and braking of the vehicle 400 because of the larger overlap of the bucket 62 provided by the larger lobes 70a, as compared to the smaller lobes 70b. Furthermore, by providing a filter bucket 62 which extends downwardly into the reservoir receiving volume and has an aperture smaller than the surface area of the filter bucket opening, the washout apparatus is far better at retaining the waste aggregate material as compared with known arrangements that do not provide the depth of filter bucket and aperture combination described above. This particular configuration is able to counteract the effects of the dynamic forces encountered during driving, particularly on uneven roads. This effect is further enhanced by the fact that the waste aggregate in the filter bucket 62 is positioned either substantially or partially below the level of the washout water in the reservoir. This arrangement therefore reduces the risk of liquid and/ or debris spillage during transportation, which is particularly important in view of the fact that it is an offence to travel with an unsecured load and it is not unknown for motorists to claim that their vehicles have been damaged by loose materials falling from transit mixers.

The waste washout water is emptied from the reservoir 14 by uncoupling the upper end of the hose 36 from the projection 38 extending from the planar corner portion 26 of the catchment tray 12 and directing downwardly into the appropriate waste water collection tank (not shown) which allows the water in the reservoir 14 to flow out of the aperture in the rear wall of the reservoir 14 and into the hose 36. By releasing the upper part of the hose 36 from the hose coupling in the planar corner portion 26 and directing it downward below the level of the water within the reservoir 14, the waste water flows out of the reservoir 14 under the influence of gravity. Importantly, this gravity-based method means that waste water can be removed from the reservoir 14 without requiring a pump means. Furthermore, since the upper end of the hose 36 is secured to the projection 38 which lies above the water level within the reservoir 14, no valve is required on the hose 36 or reservoir 14 to prevent unwanted leakage of water from the reservoir 14, in contrast with known reservoir arrangements. The present invention therefore provides a simplified washout system which does not require complicated pump or valve systems which, due to the cementitious/ sedimentious nature of the waste water, can be prone to failure.

Once all of the waste washout water has been emptied from the reservoir 14, the upper end of the hose 36 is recoupled to its corresponding projection 38 ready for the next washout operation.

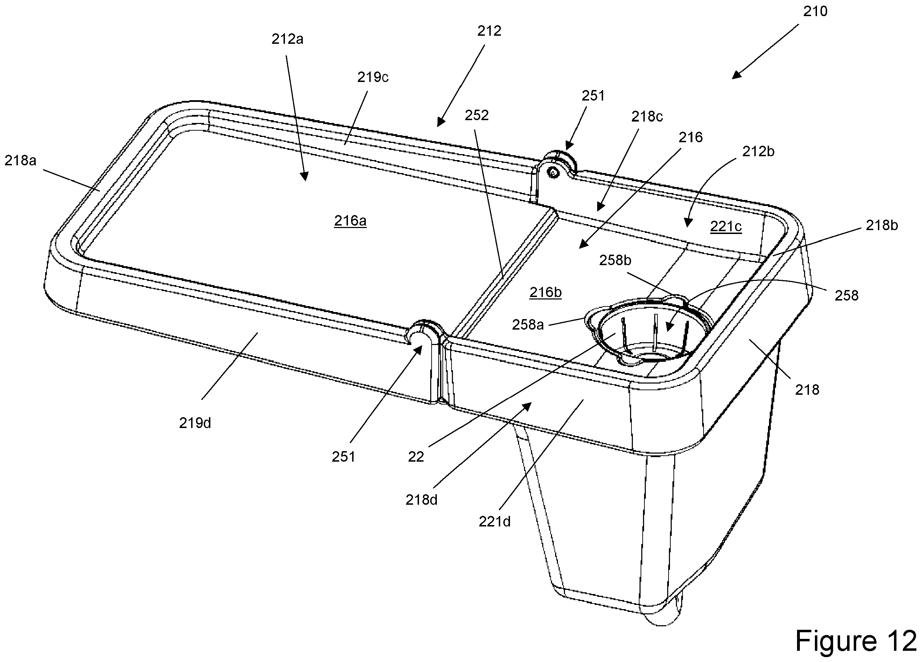

The second embodiment of the washout apparatus in accordance with the present invention is shown in Figures 12 to 17 and is similar to that of the first embodiment, the corresponding features of which are designated with the same reference numerals, prefixed with the number "2". The washout apparatus 210 comprises a catchment tray 212 for receiving washout water and any associated debris, and a reservoir 214 for retaining the washout water.

The catchment tray 212 and reservoir 214 are each formed from 6mm thick injection moulded polyethylene. The tray comprises a foldable elongate portion 212a, for positioning above the mudguard 482 of the rearmost, right hand side wheel of a concrete mixer truck 400, and a square, collecting portion 212b, hingdely attached to the rear end of the elongate portion 212a, for positioning behind the mudguard 482.

The catchment tray 212 is elongate and generally rectangular when viewed from above and comprises a base wall 216 having an enclosing wall 218 extending upwardly from the periphery of the base wall 216 which, together with the base wall 216, define a receiving volume 220 for receipt of washout water and associated debris. The base wall 216 comprises a first base wall portion 216a of the elongate foldable portion 212a of the catchment tray 212 which slopes downwardly from its front end to its rear end, and a second base wall portion 216b of the square, collecting portion 212b of the catchment tray 212 which slopes downwardly from its periphery towards a drainage aperture 258 located at the centre of the collecting portion 212b. The catchment tray 212 further comprises a removable filter 222 for separating the debris from the washout water, located in the aperture 258 positioned at the centre of the square, collecting portion 212b of the tray.

The enclosing wall 218 comprises a narrow, straight front wall portion 218a and a straight rear wall portion 218b, which is substantially parallel to the front wall portion 218a, and two side wall portions 218c, 218d, interconnecting the front and rear wall portions 218a, 218b. Each side wall 218c, 218d comprises a first portion 219c, 219d of the elongate foldable portion 212a of the catchment tray 212 and a second portion 221c, 221d of the square, collecting portion 212b of the catchment tray 212. The outer side wall portions 218c, 218d run in a straight and substantially perpendicular line between the front and rear wall portions 218a, 218b thereby defining a rectangular receiving volume 220.

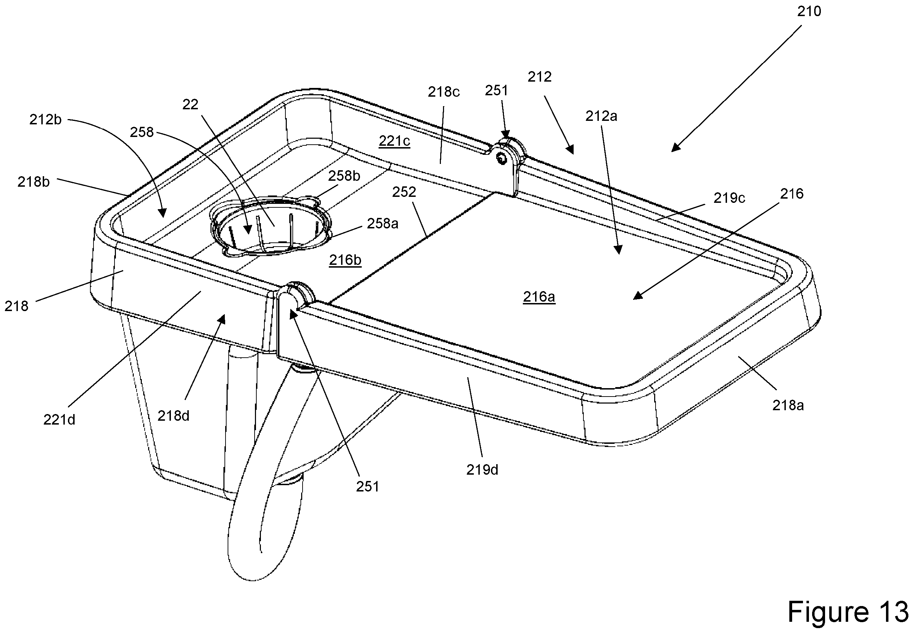

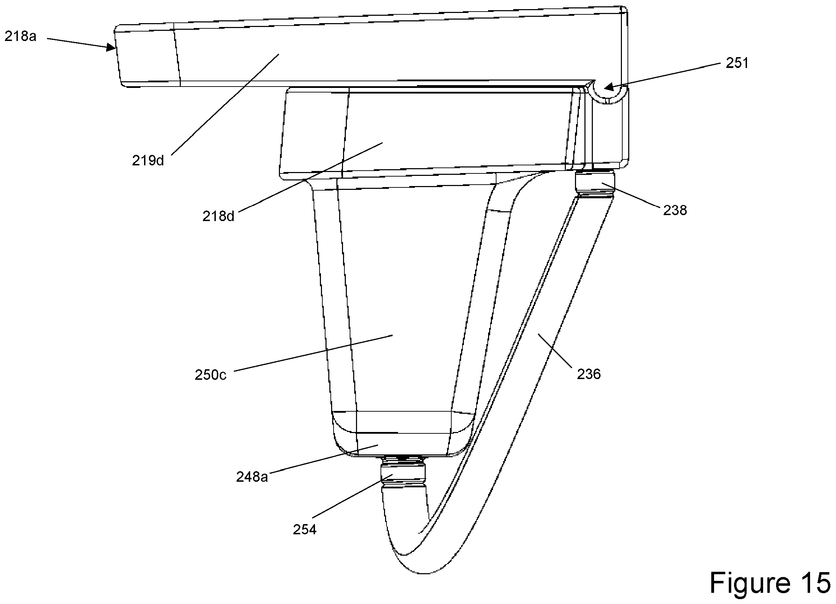

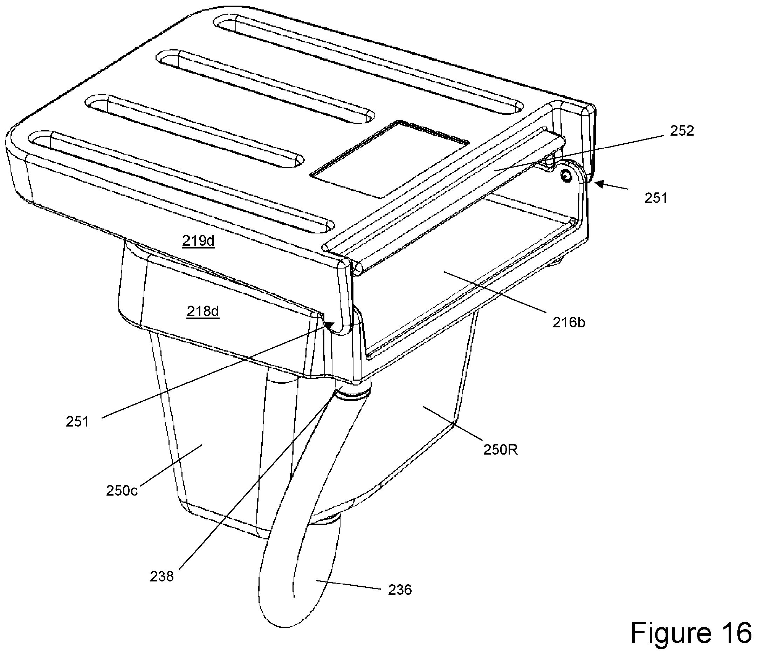

The rear end of the foldable elongate portion 212a is attached to the square, collecting portion 212b by a hinge 251 formed on either side of the outer side wall portions 218c, 218d. The hinge 251 is integrally formed by overlapping of the first and second outer side wall portions 219c, 219d, 221c, 221d. The foldable elongate portion 212a is pivotable about the hinge 251 between a first, extended position, in which the tray 212 has a generally rectangular shape in plan view (best illustrated in Figures 12 and 13) and a second, folded position, in which the foldable elongate portion 212a is folded back on top of the square, collecting portion 212b, in a 'stowed away' position (best illustrated in Figures 15 and 16).

The first portion 216a of the elongate foldable portion 212a of the catchment tray 212 comprises a lip 252 which, when in the first, extended position, overlaps the second portion 216b of the square, collecting portion 212b of the catchment tray 212 to guide washout water from the elongate foldable portion 212a to the square, collecting portion 212b.

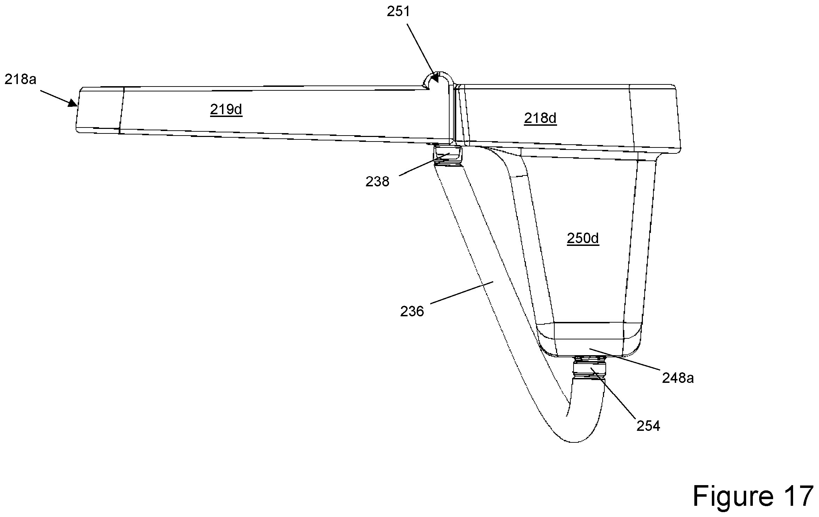

The height of the rear wall portion 218b and the second portion 221c, 221d of the side walls 218c, 218d, is the substantially the same and is greater than the height of the front wall portion 218a. Consequently, the height of the first portion 219c, 219d of the side wall portions 218c, 218d diminishes gradually from the rear end of the first portion 216a of the elongate foldable portion 212a of the catchment tray 212 to the front wall portion 218a, thereby assuming a generally wedge-shaped profile (best illustrated in Figure 17).

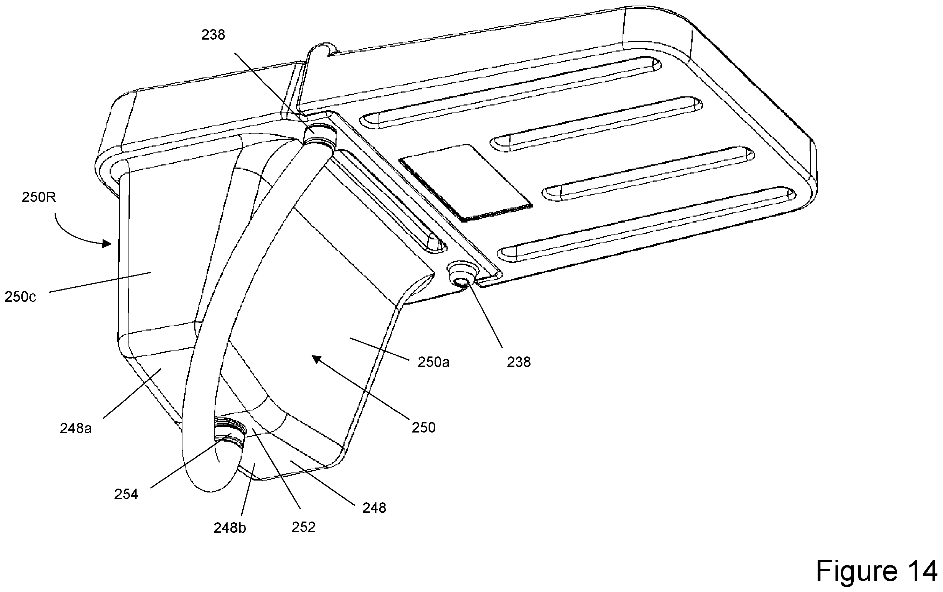

As best shown in Figures 14 to 17 the undersurface of the second portion 216b of the square, collecting portion 212b of the catchment tray 212 is provided with two identical, downwardly extending cylindrical projections 238 located adjacent to the foldable portion 212a on opposite sides of the collecting portion 212b. The length of the projections 238 is approximately half the height of the rear wall portion 218b. The projections 238 are configured to be releasably connectable to one end of a hose 236 by means of a push-fit, frictional connection.

The reservoir 214 is integrally formed as one unit with the catchment tray below the undersurface of the square, collecting portion 212b of the catchment tray 212. The reservoir 214 comprises a base wall 248 and an enclosing wall 250, which together define a reservoir receiving volume (not visible) for receipt and storage of waste washout water and fine aggregate capable of passing through the filter means, as will be explained.

The base wall 248 comprises a first, innermost planar portion 248a which extends across approximately one half of the width of the base wall 248, and a second, planar portion 248b which extends across the remaining half of the base wall 248. The two planar portions 248a, 248b slope downwardly towards each other from the side portions of the enclosing wall 250 such that they meet at a planar, elongate, longitudinally extending join 252 located substantially one half of the way across the width of the base wall 248, as best seen in Figure 14.

The reservoir enclosing wall 250 comprises a straight, inwardly stepped rear wall portion 250R, a straight front wall portion 250a which is substantially parallel to the rear wall portion 250R and two side wall portions 250c, 250d interconnecting the front and rear wall portions. The corners between the front, rear and side wall portions 250a, 250R, 250c, 250d are rounded. The enclosing wall 250 of the reservoir 214 lies inwardly of the enclosing wall 218 of the square shaped collecting portion 212b of the catchment tray 212.

Located halfway across the width of the base wall 248, where the two planar portions 248a, 248b meet, is an aperture which extends downwardly, to define a tubular hose fitting 254. The tubular hose fitting 254 receives the lower end of the hose 236 whose upper end is releasably connected to one of the projections 238 extending from the underside of the collecting portion 212b. The lower end of the hose 236 is secured to the projection 254 by means of a coupling such as a hose clip 256 (not shown), to enable drainage of the reservoir contents, when the upper end of the hose 236 is decoupled.

When the upper end of the hose 236 is attached to one of the projections 238 via coupling 240, it lies above the water level in the reservoir 214, thus preventing water from leaking out of the reservoir 214 via the hose 236, without the need to employ a valve or similar arrangement. This not only simplifies construction of the washout apparatus and reduces the cost of production, but also avoids problems associated with such a valve jamming with fine aggregate debris during the emptying process. The upper end of the hose 236 can be decoupled from the projection 238 to enable drainage of the reservoir 214 when required, as will be explained.

The base wall 216b of the square, collecting portion 212b of the catchment tray 212 slopes downwardly from the outer edges towards the centre point of the square section 212b of the tray 212 wherein a substantially circular drainage aperture 258 is located, so as to direct the flow of washout water towards the aperture 258. As best shown in Figures 12 and 13, the aperture 258 opens and extends downwardly the depth of the base wall material and into the reservoir 214 below the square, collecting portion 212b enabling waste washout water to pass from the catchment tray 212 into the reservoir 214 for secure storage.

The periphery of the aperture 258 further comprises a first pair of opposed semi-circular recesses 258a positioned at the front and rear sides of the aperture 258, respectively and extending approximately three quarters of the depth of the base wall material so as to form a flange portion 260 in the lowermost quarter portion of each recess 258a.

A second pair of opposed semi-circular recesses 258b is positioned either side of the aperture 258, substantially half way between the first pair of semi-circular recesses 258a so that the aperture 258 has four discreet lobes 258a, 258a, 258b, 258b. Each of the second pair of recesses 258b is the same length of each of the first pair of recesses 258a and, like the first pair of recesses 258a, extend approximately three quarters the depth of the base wall material so as to form a flange portion 60 in the lowermost quarter portion of the recess 258b.

The aperture 258 is sized to receive the complementarily shaped filter 22 of the first embodiment.

In use, the washout apparatus 210 is mounted onto the rear right hand side of a concrete mixer truck 400 so that the foldable elongate portion 212a of the apparatus 210 overlies the rear right mudguard 482 when in the first, extended position and the rear, substantially square shaped collecting portion 212b of the apparatus 210 is positioned rearward of the rear right mudguard 482 and directly underneath the primary discharge chute 484, similar to that of the first embodiment illustrated in Figures 10 and 11.

After the pour of concrete is completed, the driver removes any of the extension chutes (not shown) and positions them above the catchment tray 212 and positions the main chute 486 such that its mouth, i.e. the end closest to the catchment tray 212, lies above the collecting portion 212b of the catchment tray 212. The driver then washes down the hopper first and then the main chute 484, using clean water carried on-board the vehicle 400 for washout purposes.

During this process, all washout water and aggregate travel down the main chute 486 and into the square, collecting portion 212b of the catchment tray 212 positioned under the chute 486, where the sloping base wall 216 of the catchment tray 212 direct the flow of water and aggregate towards and through the aperture 258 and into the filter 22.

The driver also washes the extension chutes (not shown). The washout water from the extension chutes (not shown) flows into the catchment tray 212 and collecting portion 212b, in a similar manner to that explained above with respect to the first embodiment.

The waste washout water is emptied from the reservoir 214 by uncoupling the upper end of the hose 236 from the projection 238 extending from the base wall 216b of the square, collecting portion 212b of the catchment tray 12 and directing downwardly into the appropriate waste water collection tank (not shown) which allows the water in the reservoir 214 to flow out of the aperture in the base wall of the reservoir 214 and into the hose 236. By releasing the upper part of the hose 236 from the hose coupling in the base wall 216b of the square, collecting portion 212b and directing it downward below the level of the water within the reservoir 214, the waste water flows out of the reservoir 214 under the influence of gravity. Importantly, this gravity-based method means that waste water can be removed from the reservoir 214 without requiring a pump means. Furthermore, since the upper end of the hose 236 is secured to the projection 238 which lies above the water level within the reservoir 214, no valve is required on the hose 236 or reservoir 214 to prevent unwanted leakage of water from the reservoir 214, in contrast with known reservoir arrangements. The present invention therefore provides a simplified washout system which does not require complicated pump or valve systems which, due to the cementitious/ sedimentious nature of the waste water, can be prone to failure.

Once all of the waste washout water has been emptied from the reservoir 214, the upper end of the hose 236 is recoupled to its corresponding projection 238 and the elongate portion 212a is folded into the second, 'stowed position' ready for transport.

The invention is not restricted to the details of the foregoing embodiments.

For example, the washout apparatus of the first embodiment may be arranged in a substantially L-shaped configuration, so as to overlie the left hand side rear wheel well or mudguard, in the event that the vehicle to which it is mounted is arranged so that the discharge chutes are positioned on the left side of the vehicle.

The first embodiment of the washout apparatus comprises assembled dimensions of height 525mm, width 750mm and depth 1850mm. The catchment tray and reservoir comprises 6mm thick polyethylene and each have a capacity of approximately 60 litres. The filter comprises 6mm thick polyethylene, a height of 250mm, width of 385mm and a depth of 385mm and has a capacity of approximately 8 litres. However, it will be understood that these dimensions and capacities are given by way of example only and that some or all of the dimensions and/or capacities may be different in other embodiments of the invention. By way of example, embodiments of the washout apparatus may comprise different proportions which may, or may not provide a different shape of catchment tray and/ or reservoir, for mounting on an alternative vehicle or mobile/ portable apparatus.

It will also be understood that the hose outlet can comprise either a male or female coupling.

## Claims

1. A washout apparatus (10) comprising a catchment tray (12) and a reservoir (14), wherein at least a part of the catchment tray (12) overlies at least a part of the reservoir (14) and the catchment tray (12) and reservoir (14) are in fluid communication with each other, the catchment tray (12) comprising an outlet leading to the reservoir (14) and being shaped to guide fluid toward the outlet, the apparatus further comprising filter means (22) located in the fluid outlet of the catchment tray (12), a drainage aperture (58) between the catchment tray (12) and the reservoir (14), wherein the filter (22) is mounted in the drainage aperture (58) and wherein the filter (22) is removably mounted, and a drainage outlet (54) in the reservoir.

2. A washout apparatus as claimed in claim 1, wherein the catchment tray (12) and reservoir (14) are in fluid communication with each other via the filter (22).

3. A washout apparatus (10) as claimed in any preceding claim, wherein the catchment tray (12) comprises two portions (212a, 212b) which are displaceable with respect to each other.

4. A washout apparatus as claimed in claim 3, wherein the two portions (212a, 212b) of the catchment tray (12) are hingedly connected to each other and, optionally wherein a first portion (212a) of the catchment tray (12) is pivotable between a first, extended position and a second, folded position and/or optionally wherein the catchment tray (12) comprises an elongate portion (212a) and a collecting portion (212b) positioned at one end of the elongate portion (212a) and/or optionally wherein the catchment tray (12) comprises a base wall (216) and an enclosing wall (218), extending upwardly from the base wall (216) to define a receiving volume (220).

5. A washout apparatus (10) as claimed in any of claims 1 to 4, wherein the drainage aperture (58) and removable filter (22) are positioned in the base wall (216) of the catchment tray (12) and, optionally wherein the base wall (216) is inclined to direct fluid towards the drainage aperture (58) and filter (22).

6. A washout apparatus (10) as claimed in any of claims 3 to 5, wherein the height of the enclosing wall (218) of the catchment tray (12) is not constant around its periphery and, optionally wherein the height of the enclosing wall (218) of the collecting portion (212b) is greater than the height of the enclosing wall (218) of the elongate portion (212a) and, optionally wherein the height of the enclosing wall of (218) the elongate portion (212a) gradually increases from a front end (21 8a) towards a rear end (218b) thereby defining a substantially wedge-shaped profile and, optionally wherein the enclosing wall (218) comprises a substantially rectangular shaped recess (42).

7. A washout apparatus as claimed in any of claims 2 to 5, wherein the filter comprises a base wall and an enclosing wall extending upwardly from the periphery of the base wall to define a receiving volume for liquid and solid matter and, optionally wherein the enclosing wall (66) of the filter (22) comprises one or more apertures (68a, 68b, 68c, 68d, 68e, 68f) for selectively retaining solid matter and/ or optionally wherein the base wall comprises a recess.

8. A washout apparatus (10) as claimed in claim 7, wherein the recess (64R) is circular and, optionally wherein the filter (22) comprises a cover means (70) integrally formed with respect to the enclosing wall (66) to overlie a portion of the base wall (64) and, optionally wherein the cover means (70) comprises an aperture (72) for receipt of liquid and solid matter and, optionally wherein the cover means (70) slopes downwardly from the periphery of the cover means (70) towards the periphery of the aperture (72) and/or optionally wherein the peripheral edge of the aperture (72) and/or cover means (70) comprises one or more lobes (70b) and, optionally wherein the peripheral edge of the aperture (72) and/or cover means (70) comprises four lobes (70b) and, optionally comprising two larger lobes and two smaller lobes and, optionally wherein the two larger lobes are disposed substantially opposite one another and the two smaller lobes are disposed substantially opposite one another and, optionally wherein the two larger lobes are positioned forwardly and rearwardly, with respect to the catchment tray (12) in use and/or optionally further comprising a recess (71) on the underside of one or more of the lobes (70b) and, optionally wherein the recess (71) is substantially semi-circular.

9. A washout apparatus (10) as claimed in any preceding claim, wherein the reservoir (14) comprises a base wail (48) and an enclosing wall (50) extending upwardly from the periphery of the base wall (48) to define a receiving volume and, optionally wherein the base wall (48) of the reservoir (14) comprises two downwardly sloping planar portions and, optionally wherein one of the planar portions is approximately one quarter the width of the other planar portion.

10. A washout apparatus (10) as claimed in any of the preceding claims, wherein the catchment tray (12) completely overlies the reservoir (14) or wherein the catchment tray (12) and reservoir (14) are integrally formed with one another.

11. A washout apparatus (10) as claimed in any of claims 9 to 10, wherein the enclosing wall (50) of the reservoir (14) comprises a recessed portion and, optionally wherein the recessed portion (50R) defines the lower half of a rear portion of the enclosing wall (50).

12. A washout apparatus (10) as claimed in any preceding claim, wherein the drainage outlet in the reservoir (14) comprises a hose outlet (254) and, optionally wherein the hose outlet (254) is positioned on a recessed portion of the enclosing wall (50) of the reservoir (14) and, optionally further comprising a hose retaining means (256) and, optionally wherein the hose retaining means (256) depends from a portion of the catchment tray (12) and, optionally further comprising a hose (236) coupling member for coupling a hose to the hose retaining means (256) and/or optionally wherein the hose retaining means (256) is positioned above the level of the hose outlet (254) and/or optionally further comprising a hose (236).

13. A washout apparatus (10) as claimed in any preceding claim, further comprising one or more mounting means and, optionally wherein at least one of the mounting means comprises a frame (44) for mounting onto a vehicle (400) or mobile apparatus and, optionally wherein the frame (44) is positioned around the enclosing wall (50) of the reservoir (14) and/or optionally wherein at least one of the mounting means comprises one or more recesses (46a, 46b) or apertures for engaging with corresponding lugs or 5 projections on a vehicle (400) or mobile apparatus.

14. A washout apparatus (10) as claimed in any preceding claim, wherein one or more of the catchment tray (12), filter (22), and/or reservoir (14) comprises plastic.

15. A vehicle (400) comprising the washout apparatus (10) of any preceding claim.

## Patentansprüche

1. Auswaschvorrichtung (10), umfassend eine Auffangwanne (12) und ein Reservoir (14), wobei zumindest ein Teil der Auffangwanne (12) über zumindest einem Teil des Reservoirs (14) liegt und die Auffangwanne (12) und das Reservoir (14) in Fluidkommunikation miteinander sind, wobei die Auffangwanne (12) einen Auslass umfasst, der zu dem Reservoir (14) führt und geformt ist, um Fluid in Richtung des Auslasses zu führen, wobei die Vorrichtung ferner Filtermittel (22), die sich in dem Fluidauslass der Auffangwanne (12) befinden, eine Abflussöffnung (58) zwischen der Auffangwanne (12) und dem Reservoir (14), wobei der Filter (22) in der Abflussöffnung (58) montiert ist und wobei der Filter (22) entfernbar montiert ist, und einen Abflussauslass (54) in dem Reservoir umfasst.

2. Auswaschvorrichtung nach Anspruch 1, wobei die Auffangwanne (12) und das Reservoir (14) über den Filter (22) in Fluidkommunikation miteinander sind.

3. Auswaschvorrichtung (10) nach einem vorhergehenden Anspruch, wobei die Auffangwanne (12) zwei Abschnitte (212a, 212b) umfasst, die in Bezug zueinander verschiebbar sind.

4. Auswaschvorrichtung nach Anspruch 3, wobei die zwei Abschnitte (212a, 212b) der Auffangwanne (12) gelenkig miteinander verbunden sind, und wobei optional ein erster Abschnitt (212a) der Auffangwanne (12) zwischen einer ersten, erweiterten Position und einer zweiten, gefalteten Position schwenkbar ist, und/oder wobei optional die Auffangwanne (12) einen länglichen Abschnitt (212a) und einen Sammelabschnitt (212b) umfasst, der an einem Ende des länglichen Abschnittes (212a) positioniert ist, und/oder wobei optional die Auffangwanne (12) eine Basiswand (216) und eine Einschlusswand (218) umfasst, die sich aufwärts von der Basiswand (216) erstreckt, um ein Aufnahmevolumen (220) zu definieren.

5. Auswaschvorrichtung (10) nach einem der Ansprüche 1 bis 4, wobei die Abflussöffnung (58) und der entfernbare Filter (22) in der Basiswand (216) der Auffangwanne (12) positioniert sind, und wobei optional die Basiswand (216) geneigt ist, um Fluid in Richtung der Abflussöffnung (58) und des Filters (22) zu leiten.

6. Auswaschvorrichtung (10) nach einem der Ansprüche 3 bis 5, wobei die Höhe der Einschlusswand (218) der Auffangwanne (12) nicht konstant um ihren Umfang ist, und wobei optional die Höhe der Einschlusswand (218) des Sammelabschnittes (212b) größer als die Höhe der Einschlusswand (218) des länglichen Abschnittes (212a) ist, und wobei optional die Höhe der Einschlusswand (218) des länglichen Abschnittes (212a) von einem vorderen Ende (218a) in Richtung eines hinteren Endes (218b) stufenweise zunimmt, wodurch ein im Wesentlichen keilförmiges Profil definiert wird, und wobei optional die Einschlusswand (218) eine im Wesentlichen rechteckig geformte Aussparung (42) umfasst.

7. Auswaschvorrichtung nach einem der Ansprüche 2 bis 5, wobei der Filter eine Basiswand und eine Einschlusswand umfasst, die sich aufwärts von dem Umfang der Basiswand erstreckt, um ein Aufnahmevolumen für Flüssigkeit und Feststoffe zu definieren, und wobei optional die Einschlusswand (66) des Filters (22) eine oder mehrere Öffnungen (68a, 68b, 68c, 68d, 68e, 68f) zum selektiven Zurückhalten von Feststoffen umfasst, und/oder wobei optional die Basiswand eine Aussparung umfasst.

8. Auswaschvorrichtung (10) nach Anspruch 7, wobei die Aussparung (64R) kreisförmig ist, und wobei optional der Filter (22) ein Abdeckmittel (70) umfasst, das in Bezug auf die Einschlusswand (66) einstückig gebildet ist, um über einem Abschnitt der Basiswand (64) zu liegen, und wobei optional das Abdeckmittel (70) eine Öffnung (72) zur Aufnahme von Flüssigkeit und Feststoffen umfasst, und wobei optional das Abdeckmittel (70) abwärts von dem Umfang des Abdeckmittels (70) in Richtung des Umfangs der Öffnung (72) geneigt ist, und/oder wobei optional die Umfangskante der Öffnung (72) und/oder des Abdeckmittels (70) einen oder mehrere Lappen (70b) umfasst, und wobei optional die Umfangskante der Öffnung (72) und/oder des Abdeckmittels (70) vier Lappen (70b) umfasst, und optional umfassend zwei größere Lappen und zwei kleinere Lappen, und wobei optional die zwei größeren Lappen im Wesentlichen entgegengesetzt zueinander angeordnet sind und die zwei kleineren Lappen im Wesentlichen entgegengesetzt zueinander angeordnet sind, und wobei optional die zwei größeren Lappen vorwärts und rückwärts in Bezug auf die Auffangwanne (12) in Gebrauch positioniert sind, und/oder optional ferner umfassend eine Aussparung (71) auf der Unterseite von einem oder mehreren der Lappen (70b), und wobei optional die Aussparung (71) im Wesentlichen halbkreisförmig ist.

9. Auswaschvorrichtung (10) nach einem vorhergehenden Anspruch, wobei das Reservoir (14) eine Basiswand (48) und eine Einschlusswand (50) umfasst, die sich aufwärts von dem Umfang der Basiswand (48) erstreckt, um ein Aufnahmevolumen zu definieren, und wobei optional die Basiswand (48) des Reservoirs (14) zwei abwärts geneigte planare Abschnitte umfasst, und wobei optional einer der planaren Abschnitte annähernd ein Viertel der Breite des anderen planaren Abschnittes ist.

10. Auswaschvorrichtung (10) nach einem der vorhergehenden Ansprüche, wobei die Auffangwanne (12) vollständig über dem Reservoir (14) liegt oder wobei die Auffangwanne (12) und das Reservoir (14) einstückig miteinander gebildet sind.

11. Auswaschvorrichtung (10) nach einem der Ansprüche 9 bis 10, wobei die Einschlusswand (50) des Reservoirs (14) einen ausgesparten Abschnitt umfasst, und wobei optional der ausgesparte Abschnitt (50R) die untere Hälfte eines hinteren Abschnittes der Einschlusswand (50) definiert.

12. Auswaschvorrichtung (10) nach einem vorhergehenden Anspruch, wobei der Abflussauslass in dem Reservoir (14) einen Schlauchauslass (254) umfasst, und wobei optional der Schlauchauslass (254) an einem ausgesparten Abschnitt der Einschlusswand (50) des Reservoirs (14) positioniert ist, und optional ferner umfassend ein Schlauchrückhaltemittel (256), und wobei optional das Schlauchrückhaltemittel (256) von einem Abschnitt der Auffangwanne (12) abhängt, und optional ferner umfassend ein Schlauchkoppelelement (236) zum Koppeln eines Schlauchs an das Schlauchrückhaltemittel (256), und/oder wobei optional das Schlauchrückhaltemittel (256) über dem Niveau des Schlauchauslasses (254) positioniert ist, und/oder optional ferner umfassend einen Schlauch (236).

13. Auswaschvorrichtung (10) nach einem vorhergehenden Anspruch, ferner umfassend ein oder mehrere Montagemittel, und wobei optional zumindest eines von den Montagemitteln einen Rahmen (44) zum Montieren an einem Fahrzeug (400) oder einer Mobilvorrichtung umfasst, und wobei optional der Rahmen (44) um die Einschlusswand (50) des Reservoirs (14) positioniert ist, und/oder wobei optional zumindest eines von den Montagemitteln eine oder mehrere Aussparungen (46a, 46b) oder Blenden zum Eingreifen mit entsprechenden Laschen oder 5 Vorsprüngen an einem Fahrzeug (400) oder einer Mobilvorrichtung umfasst.

14. Auswaschvorrichtung (10) nach einem vorhergehenden Anspruch, wobei eines oder mehrere von der Auffangwanne (12), dem Filter (22) und/oder dem Reservoir (14) Kunststoff umfassen.

15. Fahrzeug (400), umfassend die Auswaschvorrichtung (10) nach einem vorhergehenden Anspruch.

## Revendications

1. Appareil de lavage (10) comprenant un bac de récupération (12) et un réservoir (14), dans lequel au moins une partie du bac de récupération (12) recouvre au moins une partie du réservoir (14) et le bac de récupération (12) et le réservoir (14) sont en communication fluidique l'un avec l'autre, le bac de récupération (12) comprenant une sortie menant au réservoir (14) et étant profilé pour guider le fluide vers la sortie, l'appareil comprenant en outre un moyen de filtre (22) situé dans la sortie de fluide du bac de récupération (12), une ouverture de drainage (58) entre le bac de récupération (12) et le réservoir (14), dans lequel le filtre (22) est monté dans l'ouverture de drainage (58) et dans lequel le filtre (22) est monté de manière amovible, et une sortie de drainage (54) dans le réservoir.

2. Appareil de lavage selon la revendication 1, dans lequel le bac de récupération (12) et le réservoir (14) sont en communication fluidique l'un avec l'autre via le filtre (22).

3. Appareil de lavage (10) selon l'une quelconque des revendications précédentes, dans lequel le bac de récupération (12) comprend deux parties (212a, 212b) qui sont déplaçables l'une par rapport à l'autre.

4. Appareil de lavage selon la revendication 3, dans lequel les deux parties (212a, 212b) du bac de récupération (12) sont reliées de manière articulée l'une à l'autre et, facultativement dans lequel une première partie (212a) du bac de récupération (12) peut pivoter entre une première position déployée et une seconde position pliée et / ou facultativement dans lequel le bac de récupération (12) comprend une partie allongée (212a) et une partie collectrice (212b) positionnée à une extrémité de la partie allongée (212a) et / ou facultativement dans lequel le bac de récupération (12) comprend une paroi de base (216) et une paroi d'enceinte (218), se déployant vers le haut depuis la paroi de base (216) pour définir un volume de réception (220).

5. Appareil de lavage (10) selon l'une quelconque des revendications 1 à 4, dans lequel l'ouverture de drainage (58) et le filtre amovible (22) sont positionnés dans la paroi de base (216) du bac de récupération (12) et, facultativement, dans lequel la paroi de base (216) est inclinée pour diriger le fluide vers l'ouverture de drainage (58) et le filtre (22).

6. Appareil de lavage (10) selon l'une quelconque des revendications 3 à 5, dans lequel la hauteur de la paroi d'enceinte (218) du bac de récupération (12) n'est pas constante autour de sa périphérie et, facultativement, dans lequel la hauteur de la paroi d'enceinte (218) de la partie collectrice (212b) est supérieure à la hauteur de la paroi d'enceinte (218) de la partie allongée (212a) et, facultativement, dans lequel la hauteur de la paroi d'enceinte de (218) la partie allongée (212a) augmente progressivement d'une extrémité avant (21 8a) vers une extrémité arrière (218b) définissant ainsi un profil sensiblement de forme oblique et, facultativement, dans lequel la paroi d'enceinte (218) comprend un évidement de forme sensiblement rectangulaire (42).

7. Appareil de lavage selon l'une quelconque des revendications 2 à 5, dans lequel le filtre comprend une paroi de base et une paroi d'enceinte s'étendant vers le haut depuis la périphérie de la paroi de base pour définir un volume de réception pour la matière liquide et solide et, facultativement, dans lequel la paroi d'enceinte (66) du filtre (22) comprend une ou plusieurs ouvertures (68a, 68b, 68c, 68d, 68e, 68f) pour retenir sélectivement la matière solide et / ou facultativement dans lequel la paroi de base comprend un évidement.

8. Appareil de lavage (10) selon la revendication 7, dans lequel l'évidement (64R) est circulaire et, facultativement, dans lequel le filtre (22) comprend un moyen de capot (70) formé d'un seul tenant par rapport à la paroi d'enceinte (66) pour recouvrir un partie de la paroi de base (64) et, facultativement, dans lequel le moyen de capot (70) comprend une ouverture (72) pour recevoir la matière liquide et solide et, facultativement dans lequel le moyen de capot (70) est incliné vers le bas depuis la périphérie du moyen de capot (70) vers la périphérie de l'ouverture (72) et / ou facultativement dans lequel le bord périphérique de l'ouverture (72) et / ou du moyen de capot (70) comprend un ou plusieurs lobes (70b) et, facultativement dans lequel le bord périphérique de l'ouverture (72) et / ou du moyen de capot (70) comprend quatre lobes (70b) et, facultativement comprenant deux lobes plus grands et deux lobes plus petits et, facultativement dans lequel les deux lobes plus grands sont disposés sensiblement en face l'un de l'autre et les deux lobes plus petits sont disposés sensiblement en face l'un de l'autre et, facultativement dans lequel les deux lobes plus grands sont positionnés vers l'avant et vers l'arrière, par rapport au bac de récupération (12) en cours d'utilisation et / ou comprenant facultativement en outre un évidement (71) sur la face inférieure d'un ou plusieurs des lobes (70b) et, facultativement dans lequel l'évidement (71) est sensiblement semi-circulaire.

9. Appareil de lavage (10) selon l'une quelconque des revendications précédentes, dans lequel le réservoir (14) comprend une paroi de base (48) et une paroi d'enceinte (50) s'étendant vers le haut depuis la périphérie de la paroi de base (48) pour définir un volume de réception et, facultativement, dans lequel la paroi de base (48) du réservoir (14) comprend deux parties planes inclinées vers le bas et, facultativement dans lequel l'une des parties planes fait approximativement un quart de la largeur de l'autre partie plane.

10. Appareil de lavage (10) selon l'une quelconque des revendications précédentes, dans lequel le bac de récupération (12) recouvre complètement le réservoir (14) ou dans lequel le bac de récupération (12) et le réservoir (14) sont formés d'un seul tenant l'un avec l'autre.

11. Appareil de lavage (10) selon l'une quelconque des revendications 9 à 10, dans lequel la paroi d'enceinte (50) du réservoir (14) comprend une partie évidée et, facultativement dans lequel la partie évidée (50R) définit la moitié inférieure d'une partie arrière de la paroi d'enceinte (50).

12. Appareil de lavage (10) selon l'une quelconque des revendications précédentes, dans lequel la sortie de drainage dans le réservoir (14) comprend une sortie de tuyau (254) et, facultativement dans lequel la sortie de tuyau (254) est positionnée sur une partie évidée de la paroi d'enceinte (50) du réservoir (14) et, facultativement comprenant en outre un moyen de retenue de tuyau (256) et, facultativement dans lequel le moyen de retenue de tuyau (256) dépend d'une partie du bac de récupération (12) et, facultativement comprenant en outre un élément d'accouplement de tuyau (236) pour coupler un tuyau à l'élément de retenue de tuyau (256) et / ou facultativement dans lequel le moyen de retenue de tuyau (256) est positionné au-dessus du niveau de la sortie de tuyau (254) et / ou facultativement comprenant en outre un tuyau (236).

13. Appareil de lavage (10) selon l'une quelconque des revendications précédentes, comprenant en outre un ou plusieurs moyens de montage et, facultativement, dans lequel au moins l'un des moyens de montage comprend un châssis (44) destiné à être monté sur un véhicule (400) ou un appareil mobile et, facultativement dans lequel le châssis (44) est positionné autour de la paroi d'enceinte (50) du réservoir (14) et / ou facultativement dans lequel au moins l'un des moyens de montage comprend un ou plusieurs évidements (46a, 46b) ou ouvertures pour s'engager avec des pattes ou 5 saillies correspondantes sur un véhicule (400) ou un appareil mobile.

14. Appareil de lavage (10) selon l'une quelconque des revendications précédentes, dans lequel un ou plusieurs parmi le bac de récupération (12), le filtre (22) et / ou le réservoir (14) comprennent du plastique.

15. Véhicule (400) comprenant l'appareil de lavage (10) selon l'une quelconque des revendications précédentes.
